# EUROPEAN PATENT APPLICATION

(11) **EP 4 407 576 A1**
(43) Date of publication of application: **31.07.2024**
(21) Application number: 22872457.1
(22) Date of filing: 18.05.2022
(51) Int. Cl.: G07G 1/12

(54) **TRANSACTION PROCESSING SYSTEM, INPUT PROCESSING DEVICE, SETTLEMENT DEVICE, AND PROGRAM RECORDING MEDIUM**

(30) Priority: 24.09.2021 JP 2021155662
(71) Applicant: Toshiba TEC Kabushiki Kaisha, Tokyo 141-8562 (JP)
(72) Inventor: HIRANO, Kazuya, Izunokuni-shi, Shizuoka 410-2392 (JP)
(74) Representative: Bandpay & Greuter
(86) International application number: PCT/JP2022/020676
(87) International publication number: WO 2023/047699

(57) **Abstract**

An input processing apparatus transmits the settlement information to a transmission destination settlement apparatus set as a transmission destination among three or more settlement apparatuses. The input processing apparatus performs a state confirmation of the transmission destination settlement apparatus. The settlement apparatus notifies the input processing apparatus of the state confirmation of the transmission destination settlement apparatus. In the case where a state confirmation result of the transmission destination settlement apparatus responded to by the input processing apparatus in response to the aforementioned notification satisfies a transmission destination change condition of the settlement information, the settlement apparatus notifies the input processing apparatus of a transmission destination change. Upon receipt of a notification of the transmission destination change from the settlement apparatus, the input processing apparatus changes the transmission destination of the settlement information.

## Description

### FIELD

Embodiments described herein relate generally to a transaction processing system, an input processing apparatus, a settlement apparatus, and a program recording medium.

### BACKGROUND

In recent years, a semi self-transaction processing system has been known as a transaction processing system for a mass retailer. This type of transaction processing system separates an input processing apparatus that inputs and registers, for each transaction, data of commodities bought and sold in each corresponding transaction, and a settlement apparatus that executes settlement processing of each transaction based on data registered by the input processing apparatus. The input processing apparatus and the settlement apparatus are arranged in such a manner that a clerk operates the input processing apparatus and a customer operates the settlement apparatus.

Such a semi self-transaction processing system lets a clerk perform data input operation of a commodity, thereby taking less time to input data than a full self-transaction processing system in which a customer performs input operation by himself or herself. On the other hand, considering that customers operate the settlement apparatus, it is assumed that a customer who is not familiar with the operation takes time for the settlement. Therefore, in general, a semi self-transaction processing system includes, for example, three or more settlement apparatuses with respect to one input processing apparatus. Transfer orders of settlement information are respectively set in advance for three or more settlement apparatuses.

The input processing apparatus transmits information necessary for settlement of a transaction to a settlement apparatus (first settlement apparatus) having the first transfer order. In the case where settlement of a previous customer has already been completed and settlement processing is executable, the first settlement apparatus processes settlement of a transaction based on information of this fact. In the case where settlement of a previous customer is still ongoing and settlement processing is not executable, the first settlement apparatus transmits information necessary for settlement of a transaction to a settlement apparatus (second settlement apparatus) having the second transfer order. The second settlement apparatus processes the settlement of the transaction based on the information received from the first settlement apparatus. In the case where the second settlement apparatus is also unable to execute the settlement processing, the second settlement apparatus transmits information necessary for settlement of the transaction to a settlement apparatus (third settlement apparatus) having the third transfer order. The third settlement apparatus processes the settlement of the transaction based on the information received from the second settlement apparatus. As described above, a conventional semi self-transaction processing system is able to settle many transactions in a short time by operating three or more settlement apparatuses efficiently.

However, a transmission destination to which the input processing apparatus transmits information necessary for settlement of a transaction is limited to the first settlement apparatus. Therefore, in the case where the first settlement apparatus is shut down and is unable to receive information necessary for settlement of a transaction, not only the first settlement apparatus but also the second settlement apparatus or the third settlement apparatus is unable to process the settlement of the transaction, thereby leading to delay in settlement, which is a problem.

### CITATION LIST

### PATENT LITERATURE

Jpn. Pat. Appln. kOKAI Publication No. 2013-242839

### SUMMARY

An object to be achieved by an embodiment of the present invention is to provide a transaction processing system capable of preventing delay in settlement.

### BRIEF DESCRIPTION OF THE DRAWINGS

FIG. 1 is a schematic diagram showing a schematic configuration of a transaction processing system according to a first embodiment.
FIG. 2 is a block diagram showing a main circuit configuration of a registration machine.
FIG. 3 is a block diagram showing a main circuit configuration of a checkout machine.
FIG. 4 is a schematic diagram showing a data structure of a connection state table.
FIG. 5 is a schematic diagram showing a checkout machine state flag included in the registration machine.
FIG. 6 is a flowchart showing a procedure of first information processing executed by a processor of the registration machine.
FIG. 7 is a flowchart showing the procedure of the first information processing executed by the processor of the registration machine.
FIG. 8 is a flowchart showing a procedure of fourth information processing executed by a processor of a first checkout machine.
FIG. 9 is a flowchart showing a procedure of fifth information processing executed by a processor of a second checkout machine.
FIG. 10 is a flowchart showing a procedure of sixth information processing executed by the processors of the first checkout machine and the second checkout machine.
FIG. 11 is a flowchart showing a procedure of second information processing executed by the processor of the registration machine.
FIG. 12 is a flowchart showing a procedure of seventh information processing executed by the processors of the first checkout machine and the second checkout machine.
FIG. 13 is a flowchart showing a procedure of third information processing executed by the processor of the registration machine.
FIG. 14 is a sequence diagram of commands exchanged between the registration machine and the first and second checkout machines.
FIG. 15 is a sequence diagram of commands exchanged between the registration machine and the first and second checkout machines.
FIG. 16 is a sequence diagram of commands exchanged between the registration machine and the first and second checkout machines.
FIG. 17 is a conceptual diagram of a transaction processing system according to a second embodiment.
FIG. 18 is a schematic diagram showing a data structure of a connection state table.
FIG. 19 is a sequence diagram of commands exchanged between the first and second registration machines and the first, second, and third checkout machines.
FIG. 20 is a conceptual diagram of a transaction processing system according to a third embodiment.
FIG. 21 is a schematic diagram showing a data structure of a connection state table.
FIG. 22 is a schematic diagram showing a data structure of a checkout machine state table.
FIG. 23 is a flowchart showing a main procedure of first information processing executed by the processor of the registration machine.
FIG. 24 is a flowchart showing a procedure of second information processing executed by the processor of the registration machine.
FIG. 25 is a flowchart showing a procedure of seventh information processing executed by a processor of the checkout machine.
FIG. 26 is a flowchart showing a procedure of the third information processing executed by the processor 31 of the registration machine.
FIG. 27 is a sequence diagram of commands exchanged between the registration machine and the first, second, third, and fourth checkout machines.
FIG. 28 is a sequence diagram of commands exchanged between the registration machine and the first, second, third, and fourth checkout machines.
FIG. 29 is a sequence diagram of commands exchanged between the registration machine and the first, second, third, and fourth checkout machines.
FIG. 30 is a sequence diagram of commands exchanged between the registration machine and the first, second, third, and fourth checkout machines.

### DETAILED DESCRIPTION

According to an embodiment, a transaction processing system includes an input processing apparatus configured to create settlement information necessary for settlement of a transaction with a customer based on input data and three or more settlement apparatuses configured to execute settlement processing of the transaction based on the settlement information. A transfer order of the settlement information is set for each of the three or more settlement apparatuses. The input processing apparatus includes a transmission unit, a state confirmation unit, a change unit. The transmission unit is configured to transmit the settlement information to a transmission destination settlement apparatus set as a transmission destination among the three or more settlement apparatuses. The state confirmation unit is configured to perform a state confirmation of the transmission destination settlement apparatus. The change unit is configured to change a transmission destination of the settlement information to another settlement apparatus other than the transmission destination settlement apparatus upon receipt of a notification of transmission destination change from the another settlement apparatus. The three or more settlement apparatuses include a confirmation notification unit, and a change notification unit. The confirmation notification unit is configured to notify the input processing apparatus of a state confirmation of the transmission destination settlement apparatus. The change notification unit is configured to notify the input processing apparatus of a transmission destination change in a case where a state confirmation result of the transmission destination settlement apparatus responded to by the input processing apparatus in response to notification of the state confirmation satisfies a transmission destination change condition of the settlement information.

Hereinafter, embodiments of a semi self-transaction processing system will be described with reference to the drawings.

A semi self-transaction processing system includes an input processing apparatus and a plurality of settlement apparatuses. The input processing apparatus is an apparatus for inputting, for each transaction, data of commodities bought and sold in a corresponding transaction, and for registering commodity sales data. The settlement apparatus is an apparatus for acquiring settlement information necessary for settlement of a transaction, including commodity sales data, etc., from the input processing apparatus and executing settlement processing of the transaction based on the settlement information. In the following embodiments, the input processing apparatus will be referred to as a registration machine, and the settlement apparatus will be referred to as a checkout machine.

### (First Embodiment)

### [Configuration of Transaction Processing System]

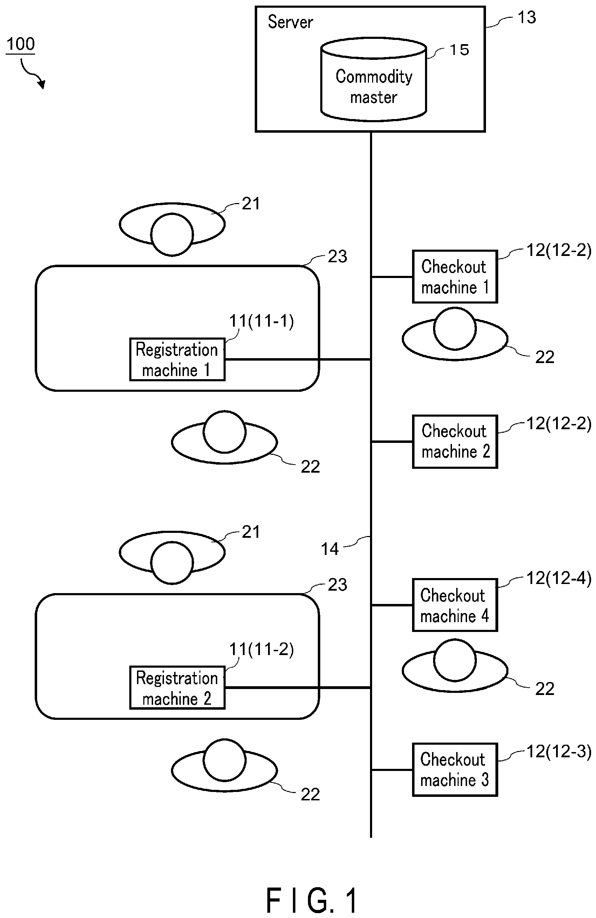

A configuration of a transaction processing system 100 according to a first embodiment will be described with reference to FIG. 1 to FIG. 5. The configuration described below is an example. The configuration can be partially changed as appropriate as long as the same effect can be achieved.

FIG. 1 is a schematic diagram showing a schematic configuration of the transaction processing system 100. The transaction processing system 100 includes registration machines 11, checkout machines 12, a server 13, and a network 14 that connects the registration machines 11, the checkout machines 12, and the server 13. The type of the network 14 is not particularly limited; however, a wired or wireless local area network (LAN) is generally applied.

A clerk 21 who plays a role called a checker serves as an operator of the registration machine 11. A consumer who purchases a commodity in a store, that is, a customer 22, serves as an operator of the checkout machine 12. In FIG. 1, the registration machines 11 are respectively attached to work tables 23. The work table 23 has a rectangular top plate. The plurality of work tables 23 are arranged in such a manner that the longitudinal directions of their top plates are substantially parallel to each other, so that a passage for each customer 22, that is, a so-called checkout lane, is formed.

The registration machine 11 and the checkout machine 12 are disposed in each checkout lane of a store. With respect to one checkout lane, the single registration machine 11 is arranged and the plurality of checkout machines 12 are arranged. Various data signals are exchanged via the network 14 between the registration machine 11 and the checkout machines 12 arranged in the same checkout lane. The data signals may be exchanged through the server 13, or may be exchanged without passing through the server 13.

FIG. 1 illustrates an example in which two registration machines 11 (11-1 and 11-2) and four checkout machines 12 (12-1, 12-2, 12-3, and 12-4) are arranged with respect to two checkout lanes. One registration machine 11-1 of two registration machines 11 constitutes a group with two checkout machines 12-1 and 12-2 of the four checkout machines 12. The other registration machine 11-2 constitutes a group with the remaining two checkout machines 12-3 and 12-4. Each of the checkout machines 12 executes settlement processing of a transaction processed by the corresponding registration machine 11 in the same group. That is, the checkout machine 12-1 and the checkout machine 12-2 execute settlement processing of a transaction processed by the registration machine 11-1. The checkout machine 12-3 and the checkout machine 12-4 execute settlement processing of a transaction processed by the registration machine 11-2. The settlement processing of a transaction does not differ between groups. Thus, the description will be continued below, focusing on a group including one registration machine 11-1 and two checkout machines 12-1 and 12-2. The description of a group constituted by the other registration machine 11-2 and the remaining two checkout machines 12-3 and 12-4 is omitted herein because it would be repetitive.

The server 13 includes a commodity master file 15. The commodity master file 15 may be stored in a storage device incorporated in the server 13 or may be stored in a storage device connected to the outside of the server 13.

The commodity master file 15 is a data file that stores a commodity record created for each commodity sold in a store. The commodity record is a data record describing commodity data such as a commodity code, a commodity name, a unit price, and an attribute.

The commodity code is a unique code set for each commodity in order to identify each commodity. Normally, a barcode or a two-dimensional code representing a commodity code is attached to each commodity. Alternatively, a radio frequency identification (RFID) tag that stores a commodity code may be attached. The registration machine 11 can input a commodity code of a commodity to be bought and sold in a transaction by reading a barcode, a two-dimensional code, or an RFID tag attached to the commodity using a reading device.

The commodity name and the unit price correspond to a name of a commodity identified by a commodity code and a price per commodity. The attribute is, for example, information on a tax of a commodity. The information on the tax includes a tax rate, a tax type (tax exclusive, tax inclusive, tax-free), etc.

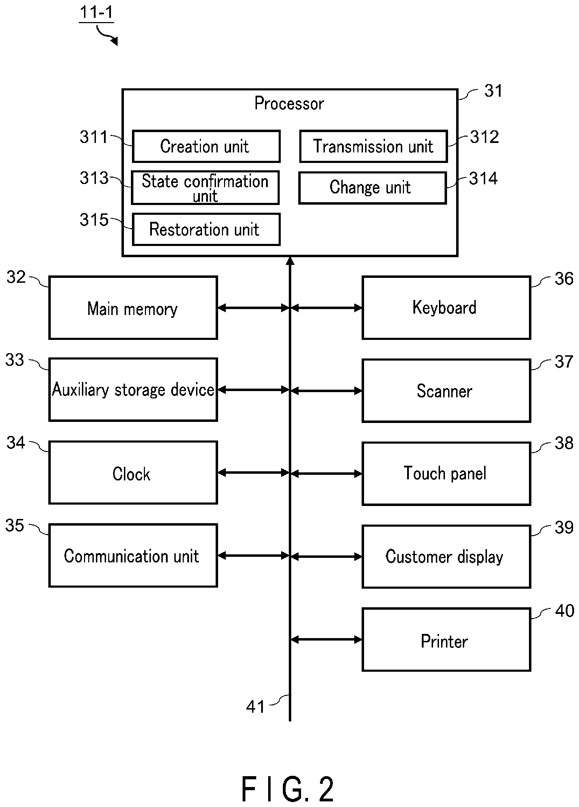

FIG. 2 is a block diagram showing a main circuit configuration of the registration machine 11-1. The registration machine 11-1 includes a processor 31, a main memory 32, an auxiliary storage device 33, a clock 34, a communication unit 35, a keyboard 36, a scanner 37, a touch panel 38, a customer display 39, a printer 40, a system transmission path 41, etc. The system transmission path 41 includes an address bus, a data bus, a control signal line, etc. The system transmission path 41 connects the processor 31 and other units directly or via a signal input/output circuit, and transmits data signals to be exchanged between the processor 31 and other units.

The registration machine 11-1 constitutes a computer by connecting the processor 31, the main memory 32, the auxiliary storage device 33, the clock 34, and the communication unit 35 via the system transmission path 41. The registration machine 11-1 connects, to its computer, devices such as the keyboard 36, the scanner 37, the touch panel 38, the customer display 39, and the printer 40 via the system transmission path 41.

The processor 31 corresponds to a central part of the computer. The processor 31 controls each unit to realize various functions of the registration machine 11-1 in accordance with an operating system or an application program. The processor 31 may be a processing circuit such as a central processing unit (CPU), a graphics processing unit (GPU), an application specific integrated circuit (ASIC), or a programmable logic device (for example, a simple programmable logic device (SPLD), a complex programmable logic device (CPLD), or a field programmable gate array (FPGA)). The processor 11 is not limited to being configured as a single processing circuit, but may be configured by combining a plurality of processing circuits.

The main memory 32 corresponds to a main storage portion of the computer. The main memory 32 includes a nonvolatile memory area and a volatile memory area. The main memory 32 stores an operating system or an application program in the nonvolatile memory area. The main memory 32 may store data necessary for the processor 31 to execute processing for controlling each unit in the nonvolatile or volatile memory area. The main memory 32 uses the volatile memory area as a work area in which data is rewritten as appropriate by the processor 31. The nonvolatile memory area is, for example, a read only memory (ROM). The volatile memory area is, for example, a random access memory (RAM).

The auxiliary storage device 33 corresponds to an auxiliary storage portion of the computer. For example, an electronic erasable programmable read-only memory (EEPROM), a hard disk drive (HDD), a solid state drive (SSD), etc., may be the auxiliary storage device 33. The auxiliary storage device 33 stores data used by the processor 31 to perform various types of processing, data created through processing performed by the processor 31, etc. The auxiliary storage device 33 may store the application program described above.

The clock 34 measures date and time. The processor 31 processes date and time clocked by the clock 34 as a current date and time.

The communication unit 35 performs data communication with the server 13 connected thereto via the network 14, and the checkout machine 12-1 and the checkout machine 12-2 in the same group. The communication unit 35 can also perform data communication with the registration machine 11-2, the checkout machine 12-3, or the checkout machine 12-4 in another group connected via the network 14.

The keyboard 36 is an input device on which various keys necessary for, e.g., inputting data related to a commodity purchased by a customer are arranged.

The scanner 37 is an example of a reading device capable of reading a code symbol such as a barcode or a two-dimensional code. The scanner 37 may be of a type that reads a code symbol by scanning a laser beam, or may be of a type that reads a code symbol from an image captured by an imaging device.

The touch panel 38 is a device having both an input device and a display device. The touch panel 38 displays information to a clerk who is an operator of the registration machine 11-1, and receives an operation input by the clerk.

The customer display 39 displays information to the customer 22 whose purchased commodity data is registered in the registration machine 11-1.

The printer 40 issues a receipt by printing various character strings, images, etc., on a receipt sheet. As the printer 40 of this type, for example, a thermal printer or a dot impact printer can be used.

As hardware of the registration machine 11-1 described above, for example, an existing POS terminal can be used. Devices connected to the registration machine 11-1 are not limited to the keyboard 36, the scanner 37, the touch panel 38, the customer display 39, and the printer 40 illustrated in FIG. 2. A device necessary for the use of the registration machine 11-1 may be added or some of the devices may be omitted.

In the registration machine 11-1 configured as described above, the processor 31 has functions of a creation unit 311, a transmission unit 312, a state confirmation unit 313, a change unit 314, and a restoration unit 315. The creation unit 311 is a function of creating settlement information necessary for settlement of a transaction with the customer 22 based on data related to a commodity input via the reading device or the input device. The transmission unit 312 is a function of transmitting the settlement information to one of the two checkout machines 12-1 and 12-2, which is set as a transmission destination.

The settlement information includes items such as a transaction number, transaction date and time, a terminal ID, commodity sales data, the total number of items, and the total amount of money. The transaction numbers are consecutive numbers issued for each transaction to individually identify transactions with customers 22. The transaction date and time are the date and time when the transaction concerned was performed. The terminal ID is identification information set for the registration machine 11-1 that has processed the transaction concerned. A unique terminal ID is set in advance for each of the registration machines 11 (11-1, 11-2, ...). A unique terminal ID is also set for each of the checkout machines 12 (12-1, 12-2, 12-3, 12-4, ...). The commodity sales data includes items such as a commodity code of a commodity to be purchased by the customer 22, a commodity name, a unit price, the number of sold commodities, the sales amount of money, and an attribute. The settlement information includes commodity sales data of all commodities purchased by the customer 22 of the transaction concerned. The total number of sold commodities is a value obtained by adding up the number of sold commodities of the commodity sales data in one transaction. The total amount of money is a value of the amount of money obtained by adding up the sales amount of the commodity sales data in one transaction.

Such settlement information is uniquely specified from the transaction number, the transaction date and time, and the terminal ID. That is, the transaction number, the transaction date and time, and the terminal ID function as transaction specifying information from which settlement-information can be specified. The transaction specifying information is not limited to the transaction number, the transaction date and time, and the terminal ID. Other items may be added or some of the items may be omitted as long as the settlement information can be specified. Furthermore, the data structure of the settlement information is not limited to the items described above. Other items may be added, or some of the items may be omitted.

The state confirmation unit 313 is a function of confirming the state of the one of the two checkout machines 12-1 and 12-2 that is set as a transmission destination. The change unit 314 is a function of, upon receipt of a notification of a transmission destination change from the other checkout machine of the two checkout machines 12-1 and 12-2 that is not set as the transmission destination, changing the transmission destination of the settlement information to the other checkout machine. The restoration unit 315 is a function of, upon receipt of a notification of the transmission destination change from the single checkout machine set as the transmission destination, returning the transmission destination to this checkout machine.

The functions of the creation unit 311, the transmission unit 312, the state confirmation unit 313, the change unit 314, and the restoration unit 315 are all realized through the first information processing, the second information processing, and the third information processing executed by the processor 31 according to a registration program. The first information processing, the second information processing, and the third information processing will be described later.

The registration program is a type of application program to be stored in the main memory 32 or the auxiliary storage device 33. A method of installing the registration program in the main memory 32 or the auxiliary storage device 33 is not particularly limited. The registration program can be installed in the main memory 32 or the auxiliary storage device 33 by recording the registration program in a removable recording medium or distributing the registration program through communication via the network 14. The recording medium may be in any form as long as it can store a program and can be read by an apparatus, like a CD-ROM or a memory card.

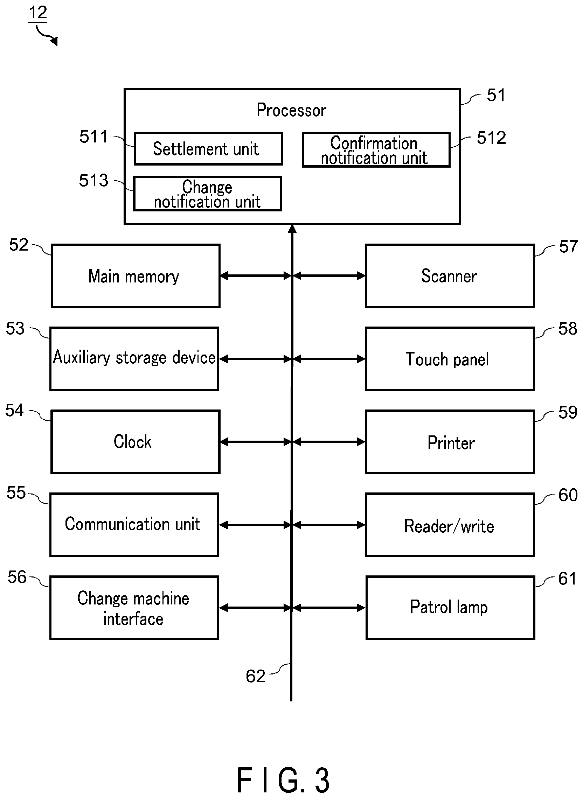

FIG. 3 is a block diagram showing a main circuit configuration of the checkout machine 12. One checkout machine 12-1 and the other checkout machine 12-2 have the same configuration. Therefore, FIG. 3 will be described with one checkout machine 12-1 and the other checkout machine 12-2 being considered as the checkout machine 12 with no distinction made therebetween.

The checkout machine 12 includes a processor 51, a main memory 52, an auxiliary storage device 53, a clock 54, a communication unit 55, a change machine interface 56, a scanner 57, a touch panel 58, a printer 59, a reader/writer 60, a patrol lamp 61, a system transmission path 62, etc. The system transmission path 62 includes an address bus, a data bus, a control signal line, etc. The system transmission path 62 connects the processor 51 and other units directly or via a signal input/output circuit, and transmits data signals exchanged between the processor 51 and other units.

The checkout machine 12 constitutes a computer by connecting the processor 51, the main memory 52, the auxiliary storage device 53, the clock 54, and the communication unit 55 via the system transmission path 62. The checkout machine 12 connects device interfaces or devices such as the change machine interface 56, the scanner 57, the touch panel 58, the printer 59, the reader/writer 60, and the patrol lamp 61 to the computer via the system transmission path 62.

The processor 51 corresponds to a central part of the computer. The processor 51 controls each unit to realize various functions of the checkout machine 12 in accordance with an operating system or an application program. The processor 51 is, for example, a CPU.

The main memory 52 corresponds to a main storage portion of the computer. The main memory 52 includes a nonvolatile memory area and a volatile memory area. The main memory 52 causes the nonvolatile memory area to store an operating system or an application program. The main memory 52 may cause the nonvolatile or volatile memory area to store data necessary for the processor 51 to execute processing for controlling each unit. The main memory 52 uses the volatile memory area as a work area in which data is rewritten as appropriate by the processor 51. The nonvolatile memory area is, for example, a ROM. The volatile memory area is, for example, a RAM.

The auxiliary storage device 53 corresponds to an auxiliary storage portion of the computer. For example, an EEPROM, an HDD, an SSD, etc., can be used as the auxiliary storage device 53. The auxiliary storage device 53 stores data used by the processor 51 to perform various types of processing, data created through processing performed by the processor 51, etc. The auxiliary storage device 53 may store the application program described above.

The clock 54 measures a date and time. The processor 51 processes the date and time clocked by the clock 54 as the current date and time.

The communication unit 55 performs data communication with the server 13 connected thereto via the network 14, or with the registration machine 11-1 in the same checkout lane. The communication unit 55 can also perform data communication with the registration machine 11-2, or the checkout machines 12-3 and 12-4 in another group connected to the communication unit 55 via the network 14.

The change machine interface 56 constitutes an interface with an automatic change machine (not shown). The change machine interface 56 inputs, from an automatic change machine, money amount data of money inserted into the automatic change machine. The change machine interface 56 outputs change data from the checkout machine 12 to the automatic change machine. The automatic change machine to which the change data has been input pays out money corresponding to the change data automatically as change.

The scanner 57 is an example of a reading device that reads a code symbol such as a barcode or a two-dimensional code. The scanner 57 may be of a type that reads a code symbol by scanning a laser beam, or may be of a type that reads a code symbol from an image captured by an imaging device.

The touch panel 58 is a device having both an input device and a display device. The touch panel 58 displays information to the customer 22 who is an operator of the checkout machine 12, and receives an operation input by the customer 22.

The printer 59 issues a receipt by printing various character strings, images, etc., on a receipt sheet. As the printer 59 of this type, for example, a thermal printer or a dot impact printer can be used.

The reader/writer 60 has a function of reading data recorded in a medium such as a card or a smartphone and a function of writing data to the medium. The card may include a member card called a membership card, a point card, etc., in addition to a settlement card such as a credit card, a debit card, an electronic money card, a prepaid card, etc. The reader/writer 60 may be any one of devices of a magnetic type, a contact type, and a noncontact type, or may include devices of a plurality of types.

The patrol lamp 61 has light emitting bodies of two colors, for example red and blue. The patrol lamp 61 is provided at the top of a pole erected in the vicinity of the checkout machine 12 in such a manner that the patrol lamp 61 corresponds to the checkout machine 12, and lights up or blinks in red or blue, for example, in accordance with the state of the corresponding checkout machine 12.

As hardware of the checkout machine 12 described above, for example a POS terminal in an existing full self-service transaction processing system, a so-called self-register, can be used. The devices connected to the checkout machine 12 are not limited to the scanner 57, the touch panel 58, the printer 59, the reader/writer 60, and the patrol lamp 61 shown in FIG. 3. A device necessary for the use of the checkout machine 12 may be added or some of the devices may be omitted.

In the checkout machine 12 configured as described above, the processor 51 has functions of a settlement unit 511, a confirmation notification unit 512, and a change notification unit 513. The settlement unit 511 is a function of executing settlement processing based on settlement information.

The confirmation notification unit 512 is a function of reporting a state confirmation of the checkout machine 12 to the registration machine 11-1 that constitutes the same group. For example, after the system is started up, the processor 51 periodically notifies the registration machine 11-1 of the state confirmation of the checkout machine 12 at intervals of a monitoring time set in a monitoring timer. For example, the processor 51 may notify the registration machine 11-1 of the state confirmation of the checkout machine 12 at a timing at which settlement processing of a transaction is ended.

The change notification unit 513 is a function of notifying the registration machine 11-1 of a transmission destination change in the case where a state confirmation result of the checkout machine 12, which is a response from the registration machine 11-1 to the notification of the state confirmation, satisfies a transmission destination change condition of settlement information. The transmission destination change condition will be described later.

The functions of the settlement unit 511, the confirmation notification unit 512, and the change notification unit 513 are all realized through fourth information processing, fifth information processing, sixth information processing, and seventh information processing executed by the processor 51 in accordance with the settlement program. The fourth information processing to the seventh information processing will be described later.

The settlement program is a type of application program stored in the main memory 52 or the auxiliary storage device 53. A method of installing the settlement program in the main memory 52 or the auxiliary storage device 53 is not particularly limited. The settlement program can be installed in the main memory 52 or the auxiliary storage device 53 by recording the settlement program in a removable recording medium or distributing the settlement program through communication via the network 14. The recording medium may be in any form as long as it can store a program and can be read by an apparatus, like a CD-ROM or a memory card.

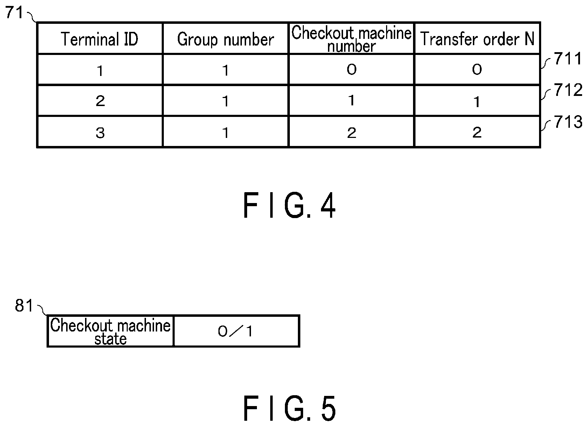

FIG. 4 is a schematic diagram showing a main data structure of the connection state table 71 included in each of the registration machine 11-1 and the checkout machines 12-1 and 12-2 which constitute the same group. The connection state table 71 is stored in, for example, the auxiliary storage devices 33 and 53. The registration machine 11-1 and the checkout machines 12-1 and 12-2 in the same group respectively have connection state tables 71 having the same contents.

As shown in FIG. 4, the connection state table 71 describes data records 711, 712, and 713 constituted by elements including a terminal ID, a group number, a checkout machine number, and a transfer order N. The data record 711 is a data record related to the registration machine 11-1. The data record 712 is a data record related to one checkout machine 12-1. The data record 713 is a data record related to the other checkout machine 12-2.

The terminal ID is unique identification information set for each of the terminals including the registration machine 11-1, the checkout machine 12-1, and the checkout machine 12-2. Different terminal IDs are set for at least the registration machine 11 and the checkout machine 12 incorporated in the transaction processing system 100.

The group number is a number set for each group in order to identify a group including one registration machine 11 and two checkout machines 12. Therefore, the group numbers in the connection state table 71 for one group are the same. The group numbers may or may not be consecutive numbers. At minimum, it is sufficient that the group number does not overlap with the group number of another group.

The checkout machine numbers are consecutive numbers starting from "1", each set for each checkout machine in order to individually identify two checkout machines 12-1 and 12-2 constituting the same group. Meanwhile, "0" is set as the checkout machine number for the registration machine 11-1 constituting the same group.

The transfer orders N are consecutive numbers starting from "1" each indicating the transfer order N of the settlement information transmitted from the registration machine 11-1 constituting the same group to each of the two checkout machines 12-1 and 12-2. The present embodiment assumes that the transfer order N of the checkout machine 12-1 whose checkout machine number is "1" is the first place and the transfer order N of the checkout machine 12-2 whose checkout machine number is "2" is the second place. The transfer order N of the checkout machine 12-2 whose checkout machine number is "2" may be the first order, and the transfer order N of the checkout machine 12-1 whose checkout machine number is "1" may be the second order. For the registration machine 11-1, "0" is set as the transfer order N. Hereinafter, for convenience of description, the checkout machine 12-1 whose checkout machine number is "1" will be referred to as a first checkout machine 12-1, and the checkout machine 12-2 whose checkout machine number is "2" will be referred to as a second checkout machine 12-2. Since the first checkout machine 12-1 has the first transfer order, it can be considered as a parent machine, a master machine, etc. Since the second checkout machine 12-2 has the second transfer order, it can be considered as a slave machine, a satellite machine, etc.

FIG. 5 is a schematic diagram showing a checkout machine state flag 81 included in the registration machine 11-1. The checkout machine state flag 81 is stored in, for example, a volatile memory area of the main memory 32. The checkout machine state flag 81 is an area for storing a value from which a determination can be made as to whether or not the first checkout machine 12-1 having the first transfer order N is set as the transmission destination of the settlement information. The value corresponds to 1-bit data of "0" or "1". The present embodiment sets "0" to the value of the checkout machine state flag 81 in the case of the first checkout machine 12-1 being the transmission destination of the settlement information, and sets "1" to the value of the checkout machine state flag 81 in the case of the first checkout machine 12-1 not being the transmission destination of the settlement information. "1" may be set to the value of the checkout machine state flag 81 in the case of the first checkout machine 12-1 being the transmission destination of the settlement information, and "0" may be set to the value of the checkout machine state flag 81 in the case of the first checkout machine 12-1 not being the transmission destination of the settlement information.

### [Function of Transaction Processing System]

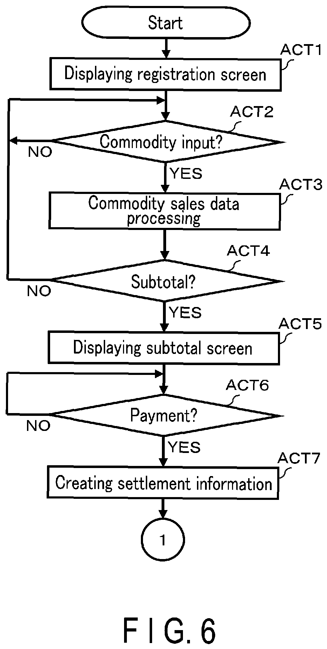

Main functions of the transaction processing system 100 will be described with reference to FIG. 6 to FIG. 16. The processing and procedures related to the functions described below are merely examples. The contents of the processing or procedure can be appropriately changed as long as the same effect can be obtained.

First, a first function related to settlement of a transaction will be described. The first function is related to the functions of the creation unit 311 and the transmission unit 312 in the registration machine 11-1. The first function is related to the function of the settlement unit 511 in the first checkout machine 12-1 and the second checkout machine 12-2. The functions of the creation unit 311 and the transmission unit 312 are based on the first information processing. The function of the settlement unit 511 is based on the fourth information processing or the fifth information processing.

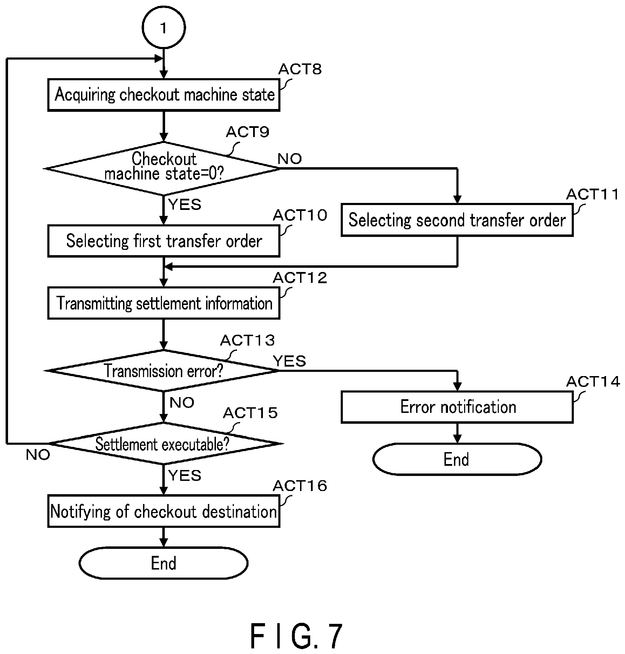

FIG. 6 and FIG. 7 are flowcharts each showing a procedure of the first information processing executed by the processor 31 of the registration machine 11-1 in accordance with a registration program. The customer 22 puts, in a shopping basket, etc., a commodity to be purchased from among commodities displayed in a salesroom and heads to a checkout lane. When the customer 22 comes to the checkout lane, the clerk 21 acting as a checker performs a declaration operation of registration start on the registration machine 11-1. This operation activates the registration program of the registration machine 11-1, so that the processor 31 starts the first information processing whose procedure is shown in the flowcharts of FIG. 6 and FIG. 7.

As ACT 1, the processor 31 causes the touch panel 38 to display a registration screen. The registration screen is, for example, a screen in which a detail area and a total area are arranged and an icon of a subtotal button is further arranged. The detail area is an area for displaying a commodity name, the number of commodities, a unit price, and the amount of money in a list format in order of a series of numbers. The total area is an area for displaying the total number of commodities and the total amount of money displayed in the detail area. The subtotal button is an operator that is touch-operated by the clerk 21 in order to instruct output of the subtotal of the commodities to be purchased by the customer 22.

As ACT 2, the processor 31, which has controlled the displaying of the registration screen, waits for data on a commodity to be input. A bar code representing a commodity code which is identification information of the commodity is attached to many commodities. Thus, the clerk 21 operates the scanner 37 to read a bar code attached to a purchased commodity of the customer 22. By the barcode being read by the scanner 37, the commodity code of the purchased commodity is input to the registration machine 11-1. On the other hand, a barcode may not be attached to some commodities, such as fresh food. In the case of a barcode not being attached to a purchased commodity, the clerk 21 touches a commodity button corresponding to the purchased commodity from a group of commodity buttons displayed on the touch panel 38. In response to the commodity button being touched, the commodity code of the commodity corresponding to the commodity button is input to the registration machine 11-1.

In response to the commodity code being input, the processor 31 proceeds to YES in ACT 2. As ACT 3, the processor 31 executes commodity sales data processing. That is, the processor 31 acquires commodity data such as a commodity name, a unit price, and an attribute from a commodity record of a commodity identified by a commodity code input through the scanner 37 or the touch panel 38. The processor 31 then registers commodity sales data including items such as a commodity code, a commodity name, a unit price, the number of sold commodities, the sales amount, and an attribute in a transaction memory. The transaction memory corresponds to a portion of the volatile memory area in the main memory 32.

As ACT 4, the processor 31, which has completed the commodity sales data processing, confirms whether or not the subtotal button has been is input. The clerk sequentially performs an operation for inputting the commodity code of the purchased commodity of the customer 22. Upon completion of input of commodity codes of all the purchased commodities, the clerk touch-operates the subtotal button.

In the case where no input is made to the subtotal button and a commodity code of the next commodity is input, the processor 31 proceeds to NO in ACT 4 and further proceeds to YES in ACT 2. That is, as ACT 3, the processor 31 executes the commodity sales processing. As a result, the commodity sales data of the purchased commodity is registered in the transaction memory.

In response to the subtotal button being input, the processor 31 proceeds to YES in ACT 4. The processor 31 displays the subtotal screen as ACT 5. The subtotal screen is a screen on which a total area is arranged and an icon of a payment button, etc., is further arranged. The total area is the same as the total area of the registration screen. The settlement button is an operator that is touch-operated by the clerk 21 in order to instruct payment of a price. The clerk 21 who has confirmed the subtotal screen touch-operates the payment button.

As ACT 6, the processor 31, which has controlled the displaying of the subtotal screen, waits for the payment button to be input. In response to the settlement button being input by the clerk 21, the processor 31 proceeds to YES in ACT 6. The processor 31 creates settlement information as ACT 7. That is, the processor 31 creates the settlement information necessary for settlement of a transaction based on the commodity sales data on each purchased commodity registered in the transaction memory, data on the total number of the sold commodities and the total amount of money, and transaction specifying data such as the transaction number, the transaction date and time, and the terminal ID of the registration machine.

Upon completion of creation of the settlement information, the processor 31 proceeds to ACT 8 in FIG. 7. The processor 31 acquires the checkout machine state flag 81 as ACT 8. The processor 31 confirms whether a value of the checkout machine state flag 81 is "0" or "1" as ACT 9.

In the case of the value of the checkout machine state flag 81 being "0", that is, the first checkout machine 12-1 being set as the transmission destination of the settlement information, the processor 31 proceeds to YES in ACT 9. As ACT 10, the processor 31 refers to the connection state table 71 and selects the terminal ID of the first checkout machine 12-1 having the transfer order N set to the first place.

In the case of the value of the checkout machine state flag 81 being "1", that is, the first checkout machine 12-1 not being set as the transmission destination of the settlement information, the processor 31 proceeds to NO in ACT 9. As ACT 11, the processor 31 refers to the connection state table 71 and selects the terminal ID of the second checkout machine 12-2 having the transfer order N set to the second place.

Upon completion of processing of ACT 10 or ACT 11, the processor 31 proceeds to ACT 12. As ACT 12, the processor 31 controls the communication unit 35 in such a manner as to transmit the settlement information while the checkout machine specified by the terminal ID acquired in the processing of ACT 10 or ACT 11 is set to the transmission destination. By this control, in the case where the terminal ID of the first checkout machine 12-1 is selected in ACT 10, the settlement information is transmitted to the network 14 with the first checkout machine 12-1 being set to the transmission destination. In the case where the terminal ID of the second checkout machine 12-2 is selected in ACT 11, the settlement information is transmitted to the network 14 with the second checkout machine 12-2 being set to the transmission destination.

As ACT 13, the processor 31 that has controlled the transmission of the settlement information confirms whether or not a transmission error has occurred. For example, in the case where the checkout machine 12 of the transmission destination has been shut down or a communication failure has occurred in the network 14, the transmission of the settlement information results in an error. In the case where the transmission of the settlement information results in an error, the processor 31 proceeds to YES in ACT 13. The processor 31 reports a transmission error of the settlement information as ACT 14. For example, the processor 31 reports a transmission error by causing the touch panel 38 to display a message indicating the transmission error.

In the case where the transmission of the settlement information does not result in an error, the processor 31 proceeds to YES in ACT 13. As ACT 15, the processor 31 confirms whether or not a settlement executable notification command is received from the checkout machine 12. In addition, in the case where the settlement information is transmitted to the checkout machine 12-1 or 12-2, the settlement executable notification command or the busy notification command is returned from any one of the checkout machines 12.

In the case where the processor 31 receives the busy notification command instead of the settlement executable notification command, the processor 31 proceeds to NO in ACT 15 and returns to ACT 8. The processor 31 then executes the processing after ACT 8 in the same manner as described above.

In the case of receiving the settlement executable notification command, the processor 31 proceeds to YES in ACT 15. The processor 31 notifies the checkout machine of the checkout destination as ACT 16. That is, in the case where the transmission source of the settlement executable notification command is the first checkout machine 12-1, the processor 31 reports that the first checkout machine 12-1 is a checkout destination. In the case of the transmission source of the settlement executable notification command being the second checkout machine 12-2, the processor 31 reports that the second checkout machine 12-2 is the checkout destination. The notification may be given to the clerk 21 using the touch panel 38 or may be given to the customer 22 using the customer display 39. The customer 22 moves to the installation location of the first checkout machine 12-1 or the second checkout machine 12-2 reported as the checkout destination, operates the checkout machine 12, and performs checkout by himself or herself.

The processor 31 completes the first information processing.

Herein, the processor 31 of the registration machine 11-1 realizes the function of the creation unit 311 through the processing of ACT 7. Furthermore, the processor 31 realizes the function of the transmission unit 312 through the processing from ACT 8 to ACT 12.

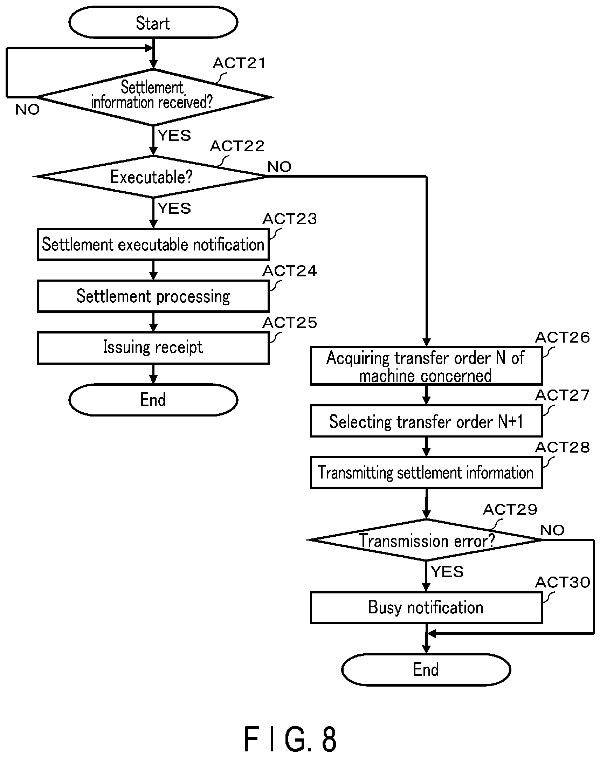

FIG. 8 is a flowchart showing a procedure of the fourth information processing executed by the processor 51 of the first checkout machine 12-1 in accordance with a settlement program. The processor 51 waits for the settlement information as ACT 21. In the case where the settlement information transmitted from the registration machine 11-1 is received by the communication unit 55, the processor 51 proceeds to YES in ACT 21. As ACT 22, the processor 51 confirms whether or not the first checkout machine 12-1 is able to execute the settlement processing. For example, in the case where the settlement processing of a previous customer has not been completed, the first checkout machine 12-1 is unable to execute the settlement processing of the next customer. Furthermore, in the case where a printer error such as paper jam or paper exhaustion of the printer 59 or a change machine error such as a money jam or change exhaustion of the change machine has occurred, the first checkout machine 12-1 is unable to execute the settlement processing.

In the case where the first checkout machine 12-1 is able to execute the settlement process, the processor 51 proceeds to YES in ACT 22. As ACT 23, the processor 51 controls the communication unit 55 in such a manner as to transmit the settlement executable notification command to the registration machine 11-1. By this control, the settlement executable notification command is transmitted to the registration machine 11-1.

The processor 51 executes settlement processing as ACT 24. Specifically, the processor 51 sets a screen of the touch panel 58 to a settlement method selection screen. The settlement method selection screen is, for example, a screen in which operators for selecting a settlement method, such as a cash button, a credit button, and an electronic money button, are arranged. The customer who has moved to the installation location of the first checkout machine 12-1 touches a button corresponding to a desired payment method. That is, a customer who wants to pay with cash touches the cash button, a customer who wants to pay with a credit card touches the credit button, and a customer who wants to pay with electronic money touches the electronic money button.

The processor 51 which has controlled the displaying of the settlement method selection screen waits for any payment method to be selected. In the case where a payment method is selected, the processor 51 executes the settlement processing corresponding to the payment method. For example, in the case where cash is selected as the payment method, the processor 51 executes processing of subtracting the total amount of money from the amount of money inserted into an automatic change machine, calculating change, and dispensing the change from the automatic change machine. For example, in the case where a credit card is selected as the payment method, the processor 51 authenticates the credit card read by the reader/writer 60, and determines the total amount of money as the credit settlement amount on condition that the credit card is approved by the server 13. For example, in the case where electronic money is selected as the payment method, the processor 51 subtracts the total amount of money from a balance of the electronic money medium read by the reader/writer 60.

Upon completion of the settlement processing of each settlement method in this way, as ACT 25, the processor 51 issues a transaction receipt by controlling the printer 59. On the transaction receipt, settlement information, that is, a transaction number, a transaction date and time, a terminal ID, commodity sales data, the total number of sold commodities, the total amount of money, etc., are printed. On the other hand, in the case where the first checkout machine 12-1 is unable to execute the settlement process, the processor 51 proceeds to NO in ACT 22. As ACT 26, the processor 51 refers to the connection state table 71 and acquires a transfer order N associated with a device ID of the machine concerned. Next, as ACT 27, the processor 51 selects another checkout machine 12-2 having a transfer order N obtained by adding "1" to the aforementioned transfer order N of the machine concerned. As ACT 28, the processor 51 then controls the communication unit 55 in such a manner as to transmit the settlement information to a selected another checkout machine 12-2 as a destination. By this control, the settlement information is transmitted (transferred) to the network 14 while the second checkout machine 12-2 having the second transfer order N is set to the transmission destination.

As ACT 29, the processor 51 that has controlled the transmission (transfer) of the settlement information confirms whether or not a transmission error has occurred. For example, in the case where the checkout machine 12-2 serving as the transmission destination has been shut down, the transmission of the settlement information results in an error. In the case where the transmission of the settlement information results in an error, the processor 51 proceeds to YES in ACT 29. As ACT 30, the processor 51 controls the communication unit 55 in such a manner as to transmit a busy notification command to the registration machine 11-1. By this control, the busy notification command is transmitted to the registration machine 11-1.

The processor 51 completes the fourth information processing.

Herein, the processor 51 of the first checkout machine 12-1 realizes the function of the settlement unit 511 through the processing of ACT 24. In addition, the processor 51 of the first checkout machine 12-1 realizes a function of a transfer unit through the processing from ACT 25 to ACT 27.

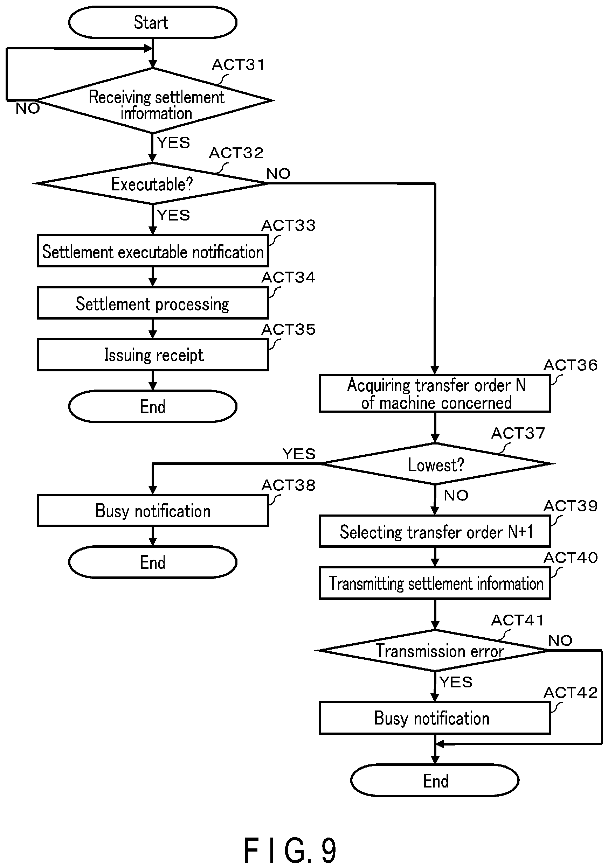

FIG. 9 is a flowchart showing a procedure of the fifth information processing executed by the processor 51 of the second checkout machine 12-2 in accordance with the settlement program. As ACT 31, the processor 51 waits for settlement information. In the case where the settlement information transmitted from the checkout machine 12-1 is received by the communication unit 55, the processor 51 proceeds to YES in ACT 31. As ACT 32, the processor 51 confirms whether or not the second checkout machine 12-2 is able to execute the settlement processing. For example, in the case where the settlement processing of a previous customer has not been completed, the second checkout machine 12-2 cannot execute the settlement processing of the next customer. Furthermore, in the case where a printer error such as paper jam or paper exhaustion of the printer 59 or a change machine error such as money jam or change exhaustion of the change machine has occurred, the second checkout machine 12-2 is unable to execute the settlement processing.

In the case where the first checkout machine 12-2 is able to execute the settlement process, the processor 51 proceeds to YES in ACT 32. As ACT 33 to ACT 35, the processor 51 executes the same processing as the processing from ACT 23 to ACT 25 in FIG. 8. That is, as ACT 33, the processor 51 controls the communication unit 55 in such a manner as to transmit the settlement executable notification command to the registration machine 11-1. Furthermore, as ACT 34, the processor 51 executes settlement processing. Thereafter, as ACT 35, the processor 51 issues a transaction receipt by controlling the printer 59.

On the other hand, in the case where the second checkout machine 12-2 is unable to execute the settlement process, the processor 51 proceeds to NO in ACT 32. As ACT 36, the processor 51 refers to the connection state table 71 and acquires a transfer order N associated with a device ID of the machine concerned. As ACT 37, the processor 51 confirms whether or not the transfer order N is the lowest among the transfer orders N of records described in the connection state table 71.

In the case where two checkout machines 12 belong to a group, the transfer order N set for the second checkout machine 12-2, that is, the second place, is the lowest. In the case where the transfer order N is the lowest, the processor 51 proceeds to YES in ACT 37. As ACT 38, the processor 51 controls the communication unit 55 in such a manner as to transmit a busy notification command to the registration machine 11-1. By this control, the settlement executable notification command is transmitted to the registration machine 11-1.

In the case where three or more checkout machines 12 belong to the group, the transfer order N set for the second checkout machine 12-2 is not the lowest. In the case where the transfer order N is not the lowest, the processor 51 proceeds to NO in ACT 37. As ACT 39, the processor 51 selects another checkout machine 12 having a transfer order N obtained by adding "1" to the aforementioned transfer order N of the machine concerned. As ACT 40, the processor 51 then controls the communication unit 55 in such a manner as to transmit the settlement information to selected another checkout machine 12 as a destination. By this control, the settlement information is transmitted (transferred) to the network 14 while the checkout machine 12 having the lower transfer order N is set to the transmission destination.

As ACT 41, the processor 51 that has controlled the transmission (transfer) of the settlement information confirms whether or not a transmission error has occurred. In the case where the transmission of the settlement information results in an error, the processor 51 proceeds to YES in ACT 41. As ACT 42, the processor 51 controls the communication unit 55 in such a manner as to transmit a busy notification command to the registration machine 11-1. By this control, the busy notification command is transmitted to the registration machine 11-1.

The processor 51 completes the fifth information processing.

Herein, the processor 51 of the second checkout machine 12-2 realizes the function of the settlement unit 511 through the processing of ACT 34. In addition, the processor 51 of the second checkout machine 12-2 realizes the function of the transfer unit through the processing of ACT 36 to ACT 40.

As is clear from the description of the first function, in the case where the registration machine 11-1 sets the first checkout machine 12-1 as the transmission destination of the settlement information, that is, in the case where the value of the checkout machine state flag 81 is "0", the settlement information created by the registration machine 11-1 is transmitted to the first checkout machine 12-1. At this time, if the first checkout machine 12-1 is in the settlement processing executable state, the settlement executable notification command is transmitted from the first checkout machine 12-1 to the registration machine 11-1. By this, the clerk 21 of the registration machine 11-1 can instruct the customer 22 to perform checkout with the first checkout machine 12-1. The customer 22 moves to the installation location of the first checkout machine 12-1 and performs operation for checkout by himself or herself. In response to this operation, the first checkout machine 12-1 executes the settlement processing.

On the other hand, if the first checkout machine 12-1 is in the settlement processing inexecutable state, the settlement information is transferred from the first checkout machine 12-1 to the second checkout machine 12-2. At this time, if the second checkout machine 12-2 is in the settlement processing executable state, the settlement executable notification command is transmitted from the second checkout machine 12-2 to the registration machine 11-1. By this, the clerk 21 of the registration machine 11-1 can instruct the customer 22 to perform checkout with the second checkout machine 12-2. The customer 22 moves to the installation location of the second checkout machine 12-2 and performs operation for checkout by himself or herself. In response to this operation, the second checkout machine 12-2 executes the settlement processing.

As described above, if at least one of the first checkout machine 12-1 and the second checkout machine 12-2 is in the settlement processing executable state, the transaction processing system 100 can settle a transaction with the customer 22 for which sales data of a purchased commodity has been registered in the registration machine 11-1.

However, if the second checkout machine 12-2 is in a settlement processing inexecutable state despite the fact that the settlement information has been transmitted (transferred) from the first checkout machine 12-1 to the second checkout machine 12-2, the busy notification command is transmitted from the second checkout machine 12-2 to the registration machine 11-1. In addition, in the case where transmission of the settlement information to the second checkout machine 12-2 results in an error due to communication abnormality between the first checkout machine 12-1 and the second checkout machine 12-2, a busy notification command is transmitted from the first checkout machine 12-1 to the registration machine 11-1. The registration machine 11-1 that has received the busy notification command transmits again the settlement information to the first checkout machine 12-1. Therefore, by at least the first checkout machine 12-1 ending a transaction with a previous customer, for example, thereby entering a settlement processing executable state, the transaction processing system 100 can settle a transaction with the customer 22.

However, in the case where transmission of the settlement information from the registration machine 11-1 to the first checkout machine 12-1 cannot be made because the first checkout machine 12-1 has been shut down, the settlement information is not transmitted (transferred) to the second checkout machine 12-2 even if the second checkout machine 12-2 operates normally. Therefore, the transaction processing system 100 is unable to settle the transaction with customer 22.

Next, a second function included in the transaction processing system 100 in order to solve such a problem will be described. In the registration function 11-1, the second function is related to the functions of the state confirmation unit 313, the change unit 314, and the restoration unit 315. In the first checkout machine 12-1 and the second checkout machine 12-2, the functions of the confirmation notification unit 512 and the change notification unit 513 are related. The function of the state confirmation unit 313 is based on the second information processing. The functions of the change unit 314 and the restoration unit 315 are based on the third information processing. The function of the confirmation notification unit 512 is based on the sixth information processing. The function of the change notification unit 513 is based on the seventh information processing.

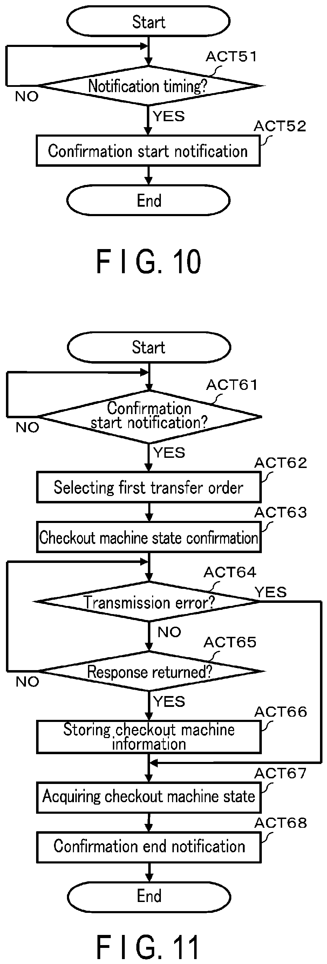

FIG. 10 is a flowchart showing a procedure of the sixth information processing executed by the processor 51 of each of the first checkout machine 12-1 and the second checkout machine 12-2 in accordance with the settlement program. As ACT 51, the processor 51 confirms whether or not a notification timing of the checkout machine confirmation notification has come. After being activated in a checkout machine mode, the processor 51 activates a monitoring timer (not shown). Each time a count value of the monitoring timer counts a set value, the processor 51 proceeds to YES in ACT 51. As ACT 52, the processor 51 controls the communication unit 55 in such a manner as to transmit a confirmation start notification command to the registration machine 11-1. By this control, the confirmation start notification command is transmitted to the registration machine 11-1.

The processor 51 completes the sixth information processing.

As described above, each of the first checkout machine 12-1 and the second checkout machine 12-2 periodically transmits the confirmation start notification command to the registration machine 11-1 in the same group at time intervals according to the setting value of the monitoring timer. The setting value of the monitoring timer is freely set. For example, an administrator of the system sets an appropriate value.

Herein, the processor 51 of each of the first checkout machine 12-1 and the second checkout machine 12-2 realizes the function of the confirmation notification unit 512 through the processing of ACT 51 and ACT 52.

FIG. 11 is a flowchart showing a procedure of the second information processing executed by the processor 31 of the registration machine 11-1 in accordance with the registration program. As ACT 61, the processor 31 waits for the confirmation start notification command. Upon receipt of the confirmation start notification command via the communication unit 35, the processor 31 proceeds to YES in ACT 61. As ACT 62, the processor 31 refers to the connection state table 71 and selects the terminal ID having the transfer order N set to the first place. As ACT 63, the processor 31 controls the communication unit 35 in such a manner as to transmit the state confirmation command to the checkout machine 12 identified by the selected terminal ID, that is, the first checkout machine 12-1. By this control, the state confirmation command is transmitted to the first checkout machine 12-1.

As ACT 64, The processor 31 that has controlled the transmission of the state confirmation command confirms whether or not a transmission error has occurred. For example, in the case where the first checkout machine 12-1 has been shut down, the transmission of the state confirmation command results in an error. In the case where the transmission of the state confirmation command results in an error, the processor 31 proceeds to "YES" in ACT 64, and proceeds to the processing of ACT 67. Processing after ACT 67 will be described later.

The processor 51 of the first checkout machine 12-1 which receives the state confirmation command collects information necessary for confirmation of a state, i.e., so-called checkout machine information. The processor 51 then controls the communication unit 55 in such a manner as to transmit the confirmation response command including the checkout machine information to the registration machine 11-1. By this control, the confirmation response command is transmitted to the registration machine 11-1. The confirmation response command includes checkout machine information. The checkout machine information is, for example, information for identifying whether an operation mode of the first checkout machine 12-1 is a checkout machine mode or a training mode, information for identifying whether an error has occurred in the printer 59, information for identifying whether an error has occurred in the change machine connected to the change machine interface 56, etc. The checkout machine information is not limited to the pieces of information described above.

If the transmission of the state confirmation command does not result in an error, the processor 31 proceeds to YES in ACT 64. As ACT 65, the processor 31 waits for the confirmation response command from the first checkout machine 12-1. Upon receipt of an acknowledgment command via the communication unit 35, the processor 31 proceeds to YES in ACT 65. As ACT 66, the processor 31 stores checkout machine information included in the confirmation response command in a temporary memory of the main memory 32. Thereafter, the processor 31 proceeds to ACT 67.

In this way, in the case where the transmission of the state confirmation command results in an error or the checkout machine information of the response command with respect to the state confirmation command is stored in the temporary memory, the processor 31 proceeds to the processing of ACT 67.

As ACT 67, the processor 31 acquires the checkout machine state flag 81. As ACT 68, the processor 31 then controls the communication unit 35 in such a manner as to transmit the confirmation end notification command to the transmission source of the confirmation start notification command. By this control, in the case where the transmission source of the confirmation start notification command is the first checkout machine 12-1, the confirmation end notification command is transmitted to the first checkout machine 12-1. In the case where the transmission source of the confirmation start notification command is the second checkout machine 12-2, the confirmation end notification command is transmitted to the second checkout machine 12-2. The confirmation end notification command includes the checkout machine state flag 81 acquired in the processing of ACT 67. In addition, in the case where the checkout machine information is stored in the temporary memory in ACT 66, the checkout machine information is also included in the confirmation end notification command. The temporary memory is then cleared.

The processor 31 completes the second information processing in this manner.

As described above, the registration machine 11-1 acquires the checkout machine information of the first checkout machine 12-1 set to the first transfer order every time the registration machine 11-1 receives the confirmation start notification command periodically transmitted from the first checkout machine 12-1 or the second checkout machine 12-2 in the same group. The registration machine 11-1 transmits the confirmation end notification command including the acquired checkout machine information and the checkout machine state flag 81 at the current time point to the first checkout machine 12-1 or the second checkout machine 12-2 which is the transmission source of the confirmation start notification command. In the case of being unable to acquire the checkout machine information from the first checkout machine 12-1, the registration machine 11-1 transmits the confirmation end notification command including the checkout machine state flag 81. The confirmation end notification command may include, in addition to the checkout machine state flag 81, information indicating that the checkout machine information was unable to be acquired.

Herein, the processor 31 of the registration machine 11-1 realizes the function of the state confirmation unit 313 by executing the processing from ACT 62 to ACT 68.

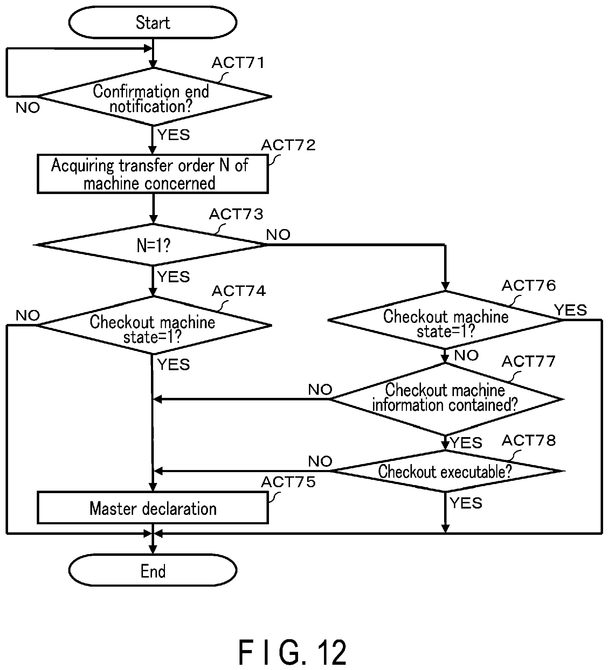

FIG. 12 is a flowchart showing a procedure of the seventh information processing executed by the processor 51 of each of the first checkout machine 12-1 and the second checkout machine 12-2 in accordance with the settlement program. As ACT 71, the processor 51 waits for the confirmation end notification command. Upon receipt of the confirmation end notification command via the communication unit 55, the processor 51 proceeds to YES in ACT 71. As ACT 72, the processor 51 refers to the connection state table 71 and acquires a transfer order N associated with a device ID of the machine concerned.

As ACT 73, the processor 51 confirms whether or not the transfer order N is the first place. In the case of the transfer order N being the first place, that is, in the case of the first checkout machine 12-1, the processor 51 proceeds to YES in ACT 73. As ACT 74, the processor 51 checks the checkout machine state flag 81 included in the confirmation end notification command. In the case of the checkout machine state flag 81 being "0", that is, the registration machine 11-1 setting the transmission destination of the settlement information to the first checkout machine 12-1, the processor 51 proceeds to NO in ACT 74 and completes the seventh information processing.

In the case of the checkout machine state flag 81 being "1", that is, the registration machine 11-1 not setting the transmission destination of the settlement information to the first checkout machine 12-1, the processor 51 proceeds to YES in ACT 74. As ACT 75, the processor 51 controls the communication unit 55 in such a manner as to transmit a master declaration command to the registration machine 11-1. By this control, the master declaration command is transmitted to the registration machine 11-1. The processor 51 that has controlled the transmission of the master declaration command completes the seventh information processing.

On the other hand, in the case of the transfer order N not being the first place, that is, in the case of the second checkout machine 12-2, the processor 51 proceeds to NO in ACT 73. As ACT 76, the processor 51 checks the checkout machine state flag 81 included in the confirmation end notification command. In the case of the checkout machine state flag 81 being "1", that is, in the case of the registration machine 11-1 not setting the transmission destination of the settlement information to the first checkout machine 12-1, to be more specific, the registration machine 11-1 setting the transmission destination to the second checkout machine 12-2, the processor 51 proceeds to YES in ACT 76 and completes the seventh information processing.

In the case of the checkout machine state flag 81 being "0", that is, in the case of the registration machine 11-1 setting the first checkout machine 12-1 to the transmission destination of the settlement information, the processor 51 proceeds to NO in ACT 75. As ACT 77, the processor 51 confirms whether or not the confirmation end notification command includes the checkout machine information of the first checkout machine 12-1. In the case of the confirmation end notification command not including the checkout machine information, the processor 51 proceeds to NO in ACT 77 and shifts to the processing of ACT 75 described above. That is, the processor 51 controls the communication unit 55 in such a manner as to transmit the master declaration command to the registration machine 11-1, and completes the seventh information processing.

In the case of the confirmation end notification command including the checkout machine information, the processor 51 proceeds to YES in ACT 77. As ACT 78, the processor 51 analyzes the checkout machine information. The processor 51 determines whether or not the first checkout machine 12-1 is in a checkout executable state.

As described above, the checkout machine information is, for example, information for identifying whether an operation mode of the first checkout machine 12-1 is a checkout machine mode or a training mode, information for identifying whether an error has occurred in the printer 59, information for identifying whether an error has occurred in the change machine connected to the change machine interface 56, etc. In the case where the operation mode of the first checkout machine 12-1 is the checkout machine mode and an error has not occurred in the printer 59 and the change machine, the processor 51 determines that the first checkout machine 12-1 is able to execute checkout. In the case where the operation mode of the first checkout machine 12-1 is the training mode or in the case where an error has occurred in the printer 59 or the change machine, the processor 51 determines that the first checkout machine 12-1 is unable to execute checkout.

In the case where it is determined that the first checkout machine 12-1 is able to execute checkout, the processor 51 proceeds to YES in ACT 78 and completes the seventh information processing.

In the case where it is determined that the first checkout machine 12-1 is unable to execute checkout, the processor 51 proceeds to NO in ACT 78 and executes the processing of ACT 75 described above. That is, the processor 51 controls the communication unit 55 in such a manner as to transmit the master declaration command to the registration machine 11-1, and completes the seventh information processing.

As described above, in the case where the checkout machine state flag 81 included in the confirmation end notification command is "1", the first checkout machine 12-1 having the first transfer order transmits the master declaration command to the registration machine 11-1. In the case of the checkout machine state flag 81 being "1", in the registration machine 11-1, the transmission destination of the settlement information is not set to the first checkout machine 12-1. Such an event may occur in the case where the first checkout machine 12-1 is shut down. Thereafter, in response to the first checkout machine 12-1 being restored, the first checkout machine 12-1 transmits again the confirmation start notification command to the registration machine 11-1. The confirmation start notification command which is a command in response to the confirmation start notification command includes "1" as the checkout machine state flag 81. Accordingly, the first checkout machine 12-1 transmits a master declaration command to the registration machine 11-1. That is, in the first checkout machine 12-1, in the case where the checkout machine state flag 81 included in the confirmation end notification command is "1", the transmission destination change condition is satisfied.

On the other hand, in the case where the checkout machine state flag 81 included in the confirmation end notification command is "1", that is, in the case where in the second registration machine 11-1, the transmission destination of the settlement information has been changed to the second checkout machine 12-2, the second checkout machine 12-2 having the second transfer order does not transmit the master declaration command to the registration machine 11-1.

On the other hand, in the case where the checkout machine state flag 81 is "0", the master declaration command is transmitted to the registration machine 11-1 if the following transmission destination change condition is satisfied.

A first condition is a case in which the confirmation end command does not include the checkout machine information. The fact that the confirmation end notification command does not include the checkout machine information means that the first checkout machine 12-1 is shut down. Accordingly, the first checkout machine 12-2 transmits a master declaration command to the registration machine 11-2.

A second condition is a case in which as a result of analyzing the checkout machine information included in the confirmation end notification command, the first checkout machine 12-1 is recognized to be in the checkout inexecutable state. Also in this case, the second checkout machine 12-2 transmits the master declaration command to the registration machine 11-1.

Herein, the processor 31 of each of the first checkout machine 12-1 and the second checkout machine 12-2 realizes the function of the change notification unit 513 by executing the processing of ACT 75. In order to distinguish the change notification unit 513 of the first checkout machine 12-1 from the change notification unit 513 of the second checkout machine 12-2, the change notification unit 513 of the second checkout machine 12-2 may be referred to as a first change notification unit 513, and the change notification unit 513 of the first checkout machine 12-1 may be referred to as a second change notification unit 513.

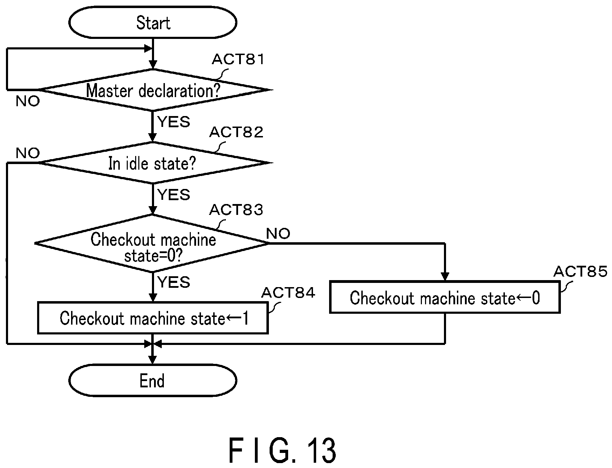

FIG. 13 is a flowchart showing a procedure of the third information processing executed by the processor 31 of the registration machine 11-1 in accordance with the registration program. As ACT 81, the processor 31 waits for the master declaration command. Upon receipt of the master declaration command via the communication unit 35, the processor 31 proceeds to YES in ACT 81. As ACT 82, the processor 31 confirms whether or not the registration machine 11-1 is in an idle state. The idle state is a state in which the processor 31 is not executing the first information processing or the second information processing. In the case where the registration machine 11-1 is not in the idle state, the processor 31 proceeds to NO in ACT 82 and completes the third information processing.

In the case where the master declaration command is received while the registration machine 11-1 is in the idle state, the processor 31 proceeds to YES in ACT 82. As ACT 83, the processor 31 checks the checkout machine state flag 81.

In the case where the checkout machine state flag 81 is "0", the processor 31 proceeds to YES in ACT 83. As ACT 84, the processor 31 changes the checkout machine state flag 81 from "0" to "1". In the case where the checkout machine state flag 81 is "1", the processor 31 proceeds to NO in ACT 83. As ACT 85, the processor 31 changes the checkout machine state flag 81 from "1" to "0". The processor 31 completes the third information processing in this manner.

As described above, in the case of receiving the master declaration command with the checkout machine state flag 81 being "0", the registration machine 11-1 changes the checkout machine state flag 81 from "0" to "1". The registration machine that transmits the master declaration command with the machine state flag 81 being "0" is the second checkout machine 12-2. In the case where the checkout machine state flag 81 is changed from "0" to "1", the processor 31 of the registration machine 11-1 proceeds to NO in ACT 9 of the first information processing and executes the processing of ACT 11. That is, the processor 31 selects from the connection state table 71 the terminal ID of the second checkout machine 12-2 in which the transfer order N is set to the second place. The processor 31 then transmits the settlement information using the second checkout machine 12-2 specified by the aforementioned terminal ID as the transmission destination.

As described above, in response to the transmission of the master declaration command from the second checkout machine 12-2, the transmission destination of the settlement information is automatically changed from the first checkout machine 12-1 to the second checkout machine 12-2. The second checkout machine 12-2 transmits the master declaration command in the case where the first condition or the second condition described above is satisfied. Therefore, in the transaction processing system 100, if the first checkout machine 12-1 is shut down or enters the checkout inexecutable state, the transmission destination of the settlement information is automatically changed from the first checkout machine 12-1 to the second checkout machine 12-2. Therefore, even if the first checkout machine 12-1 is shut down, the settlement processing of the customer 22 is not delayed.

In the case of receiving the master declaration command with the checkout machine state flag 81 being "1", the registration machine 11-1 changes the checkout machine state flag 81 from "1" to "0". The checkout machine that transmits the master declaration command with the checkout machine state flag 81 being "1" is the first checkout machine 12-1. In the case where the checkout machine state flag 81 is changed from "1" to "0", the processor 31 of the registration machine 11-1 proceeds to YES in ACT 9 of the first information processing and executes the processing of ACT 10. That is, the processor 31 selects from the connection state table 71 the terminal ID of the first checkout machine 12-1 in which the transfer order N is set to the first place. The processor 31 then transmits the settlement information using the first checkout machine 12-1 specified by the aforementioned terminal ID as the transmission destination.

As described above, in response to the transmission of the master declaration command from the first checkout machine 12-1, the transmission destination of the settlement information is automatically changed from the second checkout machine 12-2 to the first checkout machine 12-1. The first checkout machine 12-1 transmits the master declaration command in the case where the first checkout machine 12-1 which has been shut down is restored, as described above. Therefore, in the case where the first checkout machine 12-1 is restored from the shutdown, the transaction processing system 100 is able to quickly return the transmission destination of the settlement information to the first checkout machine 12-1.

Herein, the processor 31 of the registration machine 11-1 realizes the function of the change unit 314 by executing the processing of ACT 84. In addition, the processor 31 realizes the function of a restoration unit 315 by executing the processing of ACT 85.

Next, in the second function described above, a sequence of commands exchanged between the registration machine 11-1 and the first and second checkout machines 12-1 and 12-2 will be described.

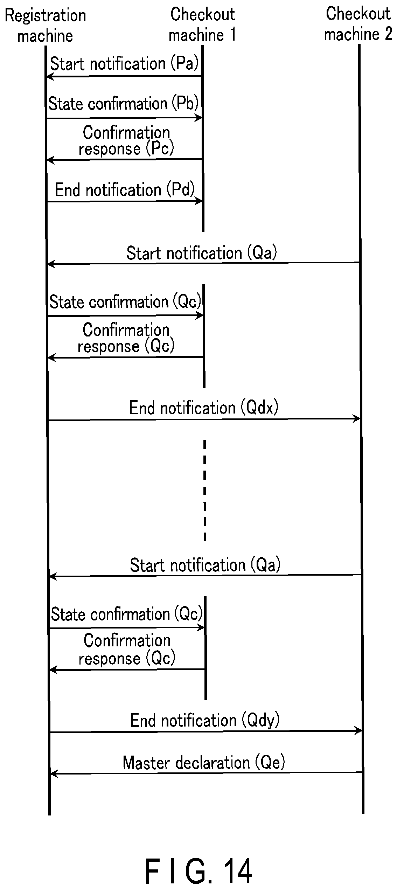

FIG. 14 is a sequence diagram showing a case in which, for example, a printer error occurs in the first checkout machine (checkout machine 1) 12-1. First, in the case where a printer error has not occurred, the first checkout machine 12-1 transmits a confirmation start notification command (Pa) to the registration machine 11-1. The registration machine 11-1 transmits a state confirmation command (Pb) to the first checkout machine 12-1 upon receipt of the confirmation start notification command (Pa), and transmits a confirmation end notification command (Pd) including the checkout machine information and the checkout machine state flag 81 to the first checkout machine 12-1 upon receipt of a confirmation response command (Pc) from the first checkout machine 12-1. At this time, the checkout machine state flag 81 is "0", so that the first checkout machine 12-1 does not transmit the master declaration command to the registration machine 11-1.

On the other hand, the second checkout machine (checkout machine 2) 12-2 transmits a confirmation start notification command (Qa) to the registration machine 11-1. Upon receipt of a confirmation response command (Qc) from the first checkout machine 12-1, the registration machine 11-1 transmits a state confirmation command (Qb) to the first checkout machine 12-1 upon receipt of the confirmation start notification command (Qa), and transmits a confirmation end notification command (Qdx) including the checkout machine information and the checkout machine state flag 81 to the second checkout machine 12-2. At this time, the checkout machine state flag 81 is "0" and the checkout machine information does not satisfy the transmission destination change condition, so that the second checkout machine 12-2 does not transmit the master declaration command to the registration machine 11-1.

At this time point, the settlement information is transmitted from the registration machine 11-1 to the first checkout machine 12-1. In the case where the first checkout machine 12-1 is in the settlement executable state, the settlement processing is executed in the first checkout machine 12-1. In the case where the first checkout machine 12-1 is in the busy state, for example, the settlement information is transferred from the first checkout machine 12-1 to the second checkout machine 12-2. The settlement processing is executed in the second checkout machine 12-2.

Thereafter, it is assumed that a printer error occurs in the first checkout machine 12-1. In such a case, the checkout machine information included in a confirmation end notification command (Qdy) transmitted from the registration machine 11-1 to the second checkout machine 12-2 satisfies the transmission destination change condition. Accordingly, the second checkout machine 12-2 transmits a master declaration command (Qe) to the registration machine 11-1. As a result, the transmission destination of the settlement information is changed from the first checkout machine 12-1 to the second checkout machine 12-2. Thereafter, the settlement processing is executed in the second checkout machine 12-2.

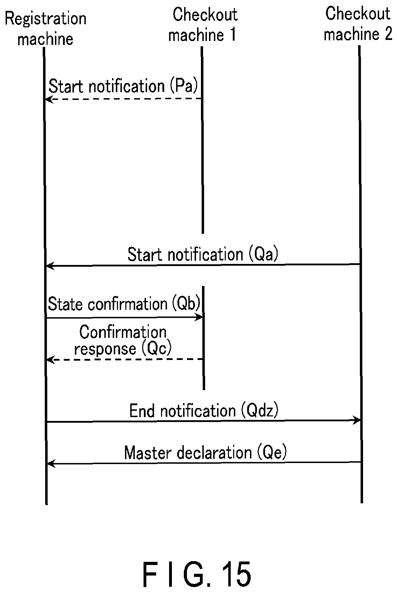

FIG. 15 is a sequence diagram showing a case in which the first checkout machine 12-1 is shut down. Since the first checkout machine 12-1 is shut down, the confirmation start notification command (Pa) is not transmitted. For this reason, the exchange of the state confirmation command (Pb), the confirmation response command (Pc), and the confirmation end notification command (Pd) which are performed between the registration machine 11-1 and the first checkout machine 12-1 in response to the confirmation start notification command (Pa) are not performed.

On the other hand, the confirmation start notification command (Qa) is transmitted from the second checkout machine 12-2. Upon receipt of the confirmation start notification command (Qa), the registration machine 11-1 transmits a state confirmation command (Qb) to the first checkout machine 12-1. However, the transmission of the state confirmation command (Qb) results in an error, so that the registration machine 11-1 is unable to receive the confirmation response command (Qc). Therefore, the checkout machine information is not included in a confirmation end notification command (Qdz) transmitted from the registration machine 11-1 to the second checkout machine 12-2, and the transmission destination change condition is satisfied. Accordingly, the second checkout machine 12-2 transmits the master declaration command (Qe) to the registration machine 11-1. As a result, after this, the settlement information is transmitted from the registration machine 11-1 to the second checkout machine 12-2. The settlement processing is then executed in the second checkout machine 12-2.

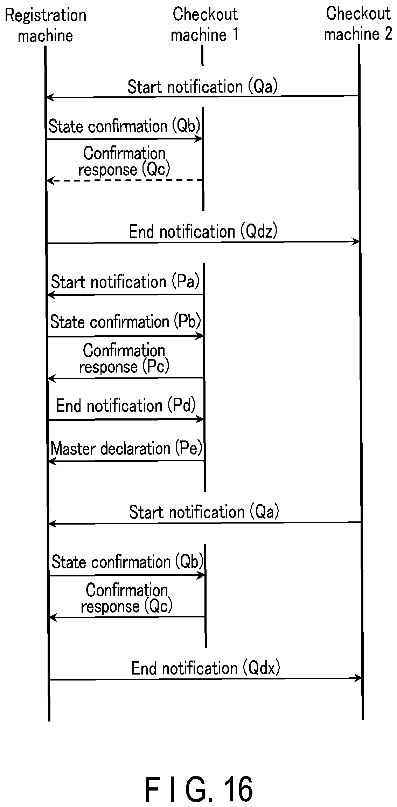

FIG. 16 is a sequence diagram showing a case in which the first checkout machine 12-1 is restored from shutdown. Before the first checkout machine 12-1 is restored, the checkout machine state flag 81 included in the confirmation end notification command (Qdz) transmitted from the registration machine 11-1 to the second checkout machine 12-2 is "1". Accordingly, the second checkout machine 12-2 does not transmit the master declaration command (Qe).

In response to the first checkout machine 12-1 being restored, the first checkout machine 12-1 resumes the transmission of the confirmation start notification command (Pa). The registration machine 11-1 transmits the state confirmation command (Pb) to the first checkout machine 12-1 upon receipt of the confirmation start notification command (Pa), and transmits the confirmation end notification command (Pd) including the checkout machine information and the checkout machine state flag 81 to the first checkout machine 12-1 upon receipt of the confirmation response command (Pc) from the first checkout machine 12-1. At this time, the checkout machine state flag 81 is "1", so that the first checkout machine 12-1 does not transmit the master declaration command (Pe) to the registration machine 11-1. As a result, the transmission destination of the settlement information is restored from the second checkout machine 12-2 to the first checkout machine 12-1.

Thereafter, the confirmation end notification command (Qdx) that is transmitted from the registration machine 11-1 to the second checkout machine 12-2 in response to the confirmation start notification command (Qa) from the second checkout machine 12-2 includes the checkout machine information in a normal state. Furthermore, the checkout machine state flag 81 is also changed to "0". Therefore, the second checkout machine 12-2 does not transmit the master declaration command (Qe).

In the examples of the sequence shown in FIG. 14 to FIG. 16, each of the checkout machines 12-1 and 12-2 transmits the confirmation start notification command (Pa, Qa) after transmission of the confirmation end notification command (Pd, Qd) from the registration machine 11-1. However, in practice, there may be a case in which the registration machine 11-1 receives the confirmation start notification command (Pa, Qa) from one checkout machine before transmission of the confirmation end notification command (Pd, Qd) to the other checkout machine. In such a case, after transmission of the confirmation end notification command (Pd, Qd) to one checkout machine, the registration machine 11-1 executes processing according to the confirmation start notification command (Pa, Qa) from the other checkout machine, that is, transmission of the state confirmation command, reception of the confirmation response command, and transmission of the confirmation end notification command.

As described above in detail, according to the transaction processing system 100, even in the case in which the first checkout machine 12-1 is shut down and the registration machine 11 is no longer able to transmit the settlement information to the first checkout machine 12-1, the transmission destination of the settlement information is immediately changed to the second checkout machine 12-2. The same applies to a case in which settlement becomes inexecutable due to occurrence of a failure such as a printer error or a change machine error in the first checkout machine 12-1. Therefore, even in a case in which an abnormality occurs in the first checkout machine 12-1 which is the transmission destination of the settlement information, delay in settlement of a transaction can be prevented. As a result, a transaction processing system with high processing efficiency can be provided.

In addition, in the case where the first checkout machine 12-1 is restored, the transmission destination of the settlement information can be quickly returned to the first checkout machine 12-1. Generally, in a semi self-checkout transaction processing system, there is a tendency for a checkout machine with a good customer movement efficiency to be set to the first checkout machine 12-1. This can minimize the influence accompanying the abnormality of the first checkout machine 12-1.

The registration machine 11 sets information for identifying the checkout machine which is the transmission destination of the settlement information to the checkout machine state flag 81 of 1-bit data. Therefore, the memory capacity of the registration machine 11 is not affected.

The present embodiment described that the processor 31 of the registration machine 11 executes the second information processing and the third information processing in accordance with the registration program. The program for executing the second information processing and the third information processing is not limited to the registration program. The processor 31 may execute the second information processing and the third information processing in accordance with a program different from the registration program. Similarly, the program for the processor 51 of the checkout machine 12 to execute the fifth information processing to the seventh information processing is not limited to the settlement program. The processor 51 may execute the fifth information processing to the seventh information processing in accordance with a program different from the registration program.

The checkout machine 12 to which the confirmation start notification command is transmitted may be only the checkout machine 12 which is not set to the transmission destination of the settlement information in the registration machine 11. For example, as in the present embodiment, in the case of the first checkout machine 12-1 being the transmission destination, only the second checkout machine 12-2 periodically transmits the confirmation start notification command. In the case in which the confirmation end notification command transmitted in response to the aforementioned confirmation start notification command satisfies the transmission destination change condition, the second checkout machine 12-2 transmits the master declaration command to the registration machine 11-1. The second checkout machine 12-2 then halts the transmission of the confirmation start notification command. Thereafter, the transmission destination returns to the first checkout machine 12-1 in response to the first checkout machine 12-1 being restored, so that the second checkout machine 12-2 resumes the transmission of the confirmation start notification command. Even with such a configuration, the same effect as that of the present embodiment can be achieved.

### (Second Embodiment)

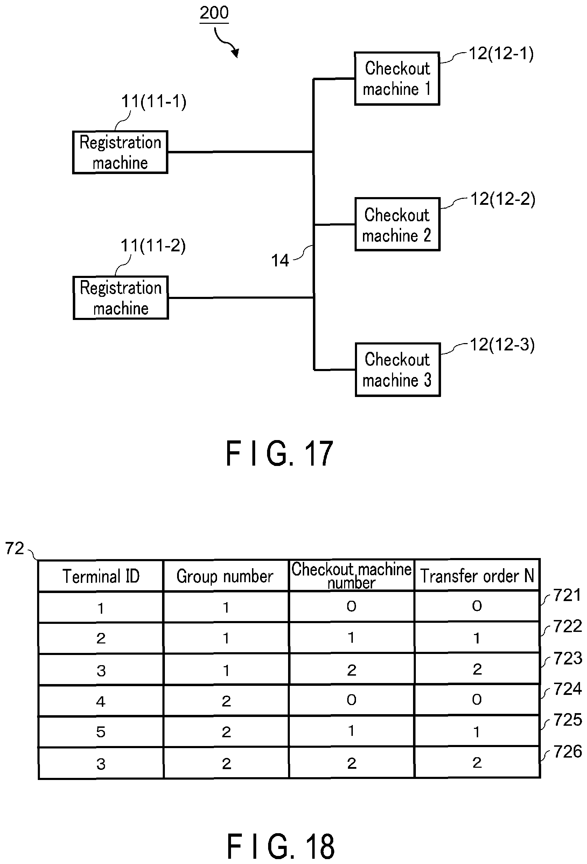

FIG. 17 is a conceptual diagram of a transaction processing system 200 according to a second embodiment. The transaction processing system 200 includes two registration machines 11 (11-1 and 11-2) and three checkout machines 12 (12-1, 12-2, and 12-3). The registration machine 11 and the checkout machines 12 are connected to each other via the network 14. Although not illustrated, the server 13 is also connected to the network 14 as in the first embodiment.

In the transaction processing system 200, one registration machine 11-1 and two checkout machines 12-1 and 12-2 constitute one group. In addition, in the transaction processing system 200, the other registration machine 11-2 and two checkout machines 12-2 and 12-3 constitute one group. That is, one registration machine 11-1 and the other registration machine 11-2 share the checkout machine 12-2. Therefore, the transaction processing system according to the second embodiment also considers one registration machine and two checkout machines as one group as in the first embodiment.

The registration machines 11-1 and 11-2 and the checkout machines 12-1, 12-2 and 12-3 are the same as those in the first embodiment in terms of hardware configuration. Therefore, the second embodiment will use FIGS. 2 and 3 as they are and omit their description. In addition, the registration machines 11-1 and 11-2 are also the same as those in the first embodiment in terms of having the checkout machine state flag 81. In the following description, a checkout machine state flag included in the registration machine 11-1 will be referred to as a checkout machine state flag 811, and a checkout machine state flag included in the registration machine 11-2 will referred to as a checkout machine state flag 812 in order to make a distinction.

FIG. 18 is a schematic diagram showing a main data structure of the connection state table 72 included in each of the registration machines 11-1 and 11-2 and the checkout machines 12-1, 12-2 and 12-3. The connection state table 72 is stored in, for example, the auxiliary storage devices 33 and 53. Each of the registration machines 11-1 and 11-2 and each of the checkout machines 12-1, 12-2 and 12-3 of the two groups sharing the checkout machine 12-2 have a connection state table 72 with the same contents.

As shown in FIG. 18, the connection state table 72 describes data records 721, 722, 723, 724, 725, and 726 constituted by elements including a terminal ID, a group number, a checkout machine number, and a transfer order N. The data record 721 is a data record related to the registration machine 11-1. The data record 722 is a data record related to the checkout machine 12-1. The data record 723 is a data record related to the checkout machine 12-2. The data record 724 is a data record related to the registration machine 11-2. The data record 725 is a data record related to the checkout machine 12-3. The data record 726 is a data record related to the checkout machine 12-2. As described above, for the checkout machine 12-2 shared by two groups, the data record 723 and the data record 726 respectively corresponding to these groups are described in the connection state table 72.

The terminal ID is unique identification information set for each of the terminals, the registration machine 11-1 and 11-2 and the checkout machines 12-1, 12-2, and 12-3.

The group number is a number set for each group in order to identify each group including one registration machine 11 and two checkout machines 12. Therefore, the data records 721, 722, and 723 with respect to the registration machine 11-1 and the checkout machines 12-1 and 12-2 constituting one group exhibit a common group number. The data records 724, 725, 726 with respect to the registration machine 11-2 and the checkout machines 12-3 and 12-2 constituting the other group exhibit a common group number.

The checkout machine numbers are consecutive numbers starting from "1", each set for each checkout machine in order to individually identify two checkout machines 12-1 and 12-2 constituting the same group. Meanwhile, "0" is set as the checkout machine number for the registration machine 11-1 constituting the same group.

The transfer orders N are consecutive numbers starting from "1" each indicating the transfer order N of the settlement information transmitted from the registration machine 11 constituting the same group to each of the two checkout machines 12. With respect to the group to which one registration machine 11-1 belongs, the present embodiment assumes that the transfer order N of the checkout machine 12-1 whose checkout machine number is "1" is the first place and the transfer order N of the checkout machine 12-2 whose checkout machine number is "2" is the second place. With respect to the group to which the other registration machine 11-2 belongs, the present embodiment assumes that the transfer order N of the checkout machine 12-3 whose checkout machine number is "3" is the first place and the transfer order N of the checkout machine 12-2 whose checkout machine number is "2" is the second place. Hereinafter, for convenience of description, one registration machine 11-1 will be referred to as a first registration machine 11-1, and the other registration machine 11-2 will be referred to as a second registration machine 11-2. Furthermore, the checkout machine 12-1 having the checkout machine number of "1" will be referred to as a first checkout machine 12-1, the checkout machine 12-2 having the checkout machine number of "2" will be referred to as a second checkout machine 12-2, and the checkout machine 12-3 having the checkout machine number of "3" will be referred to as a third checkout machine 12-3. Since the first checkout machine 12-1 and the third checkout machine 12-3 have the first transfer order, they can be considered as parent machines, master machines, etc. Since the second checkout machine 12-2 has the second transfer order, it can be considered as a slave machine, a satellite machine, etc. Meanwhile, the second checkout machine 12-2 shared by two groups may have the first transfer order in one group and the second transfer order in the other group.

The function of the transaction processing system 200 is basically the same as that of the transaction processing system 100 according to the first exemplary embodiment. Therefore, the flowcharts shown in FIG. 6 to FIG. 13 described in the first embodiment are also employed in the second embodiment as they are, and the description thereof is omitted.

However, in the second embodiment, the second checkout machine 12-2 is shared by two groups. Therefore, as a data record related to the second checkout machine 12-2, the data record 723 for the group having the group number of "1" and the data record 726 for the group having the group number of "2" are described in the connection state table 72. As a result, the second checkout machine 12-2 periodically transmits the confirmation start notification command not only to the first registration machine 11-1 belonging to the group having the group number of "1" but also to the second registration machine 11-2 belonging to the group having the group number of "2".

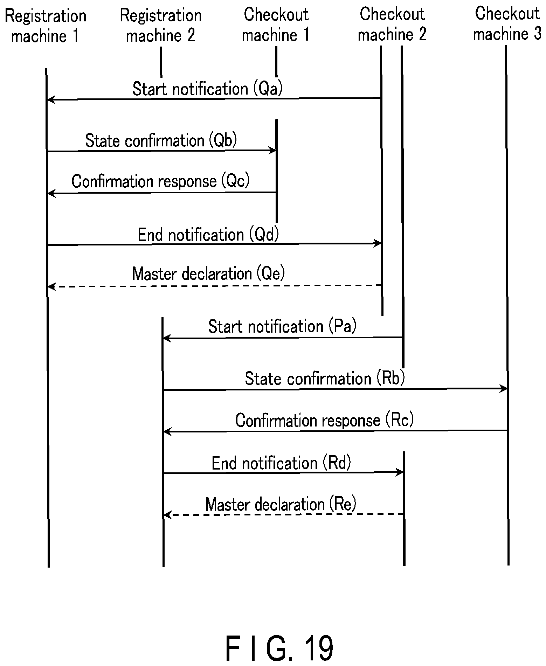

FIG. 19 is a sequence diagram of commands exchanged between the first and second registration machines (registration machine 1) 11-1 and (registration machine 2) 11-2 and the first, second, and third checkout machines (checkout machine 1) 12-1, (checkout machine 2) 12-2, and (checkout machine 3) 12-3. As illustrated in the drawing, the second checkout machine 12-2 transmits the confirmation start notification command (Qa) to the first registration machine 11-1 belonging to the group having the group number of "1". The first registration machine 11-1 transmits a state confirmation command (Qb) to the first checkout machine 12-1 upon receipt of the aforementioned confirmation start notification command (Qa), and transmits, upon receipt of the confirmation response command (Qc) from the first checkout machine 12-1, a confirmation end notification command (Qd) including the checkout machine information and the checkout machine state flag 811 to the second checkout machine 12-2. At this time, in the case where the transmission destination change condition is not satisfied, the second checkout machine 12-2 does not transmit the master declaration command (Qe) to the first registration machine 11-1. Assuming that the checkout machine state flag 811 is "0" and the checkout machine information is not included in the confirmation end notification command (Qd), or that the checkout machine information indicates that an error has occurred in the first checkout machine 12-1 and the transmission destination change condition is satisfied, the second checkout machine 12-2 transmits the master declaration command (Qe) to the first registration machine 11-1.

On the other hand, the second checkout machine 12-2 transmits a confirmation start notification command (Ra) to the second registration machine 11-2 belonging to the group having group number of "2", too. Upon receipt of the aforementioned confirmation start notification command (Ra), the second registration machine 11-2 transmits a state confirmation command (Rb) to the third checkout machine 12-3, and transmits, upon receipt of the confirmation response command (Re) from the third checkout machine 12-3, a confirmation end notification command (Rd) including the checkout machine information and the checkout machine state flag 812, to the second checkout machine 12-2. At this time, in the case where the transmission destination change condition is not satisfied, the second checkout machine 12-2 does not transmit the master declaration command (Re) to the second registration machine 11-2. Assuming that the checkout machine state flag 81 is "0" and the checkout machine information is not included in the confirmation end notification command (Rd), or that the checkout machine information indicates that an error has occurred in the third checkout machine 12-3 and the transmission destination change condition is satisfied, the second checkout machine 12-2 transmits the master declaration command (Re) to the second registration machine 11-2.

As in the first embodiment, the second embodiment having such a configuration can prevent delay in settlement even in a case in which an abnormality occurs in the first checkout machine 12-1 or the third checkout machine 12-3 set to the transmission destination of the settlement information. In addition, as the second embodiment can reduce the number of checkout machines required for two groups, there is also an advantage whereby the equipment cost can be reduced.

### (Third Embodiment)

The first and second embodiments described the transaction processing systems 100 and 200 in which one registration machine 11 and two checkout machines 12 constitute a group. A third embodiment will describe a transaction processing system in which one registration machine 11 and three or more checkout machines 12 constitute a group.

### [Configuration of Transaction Processing System]

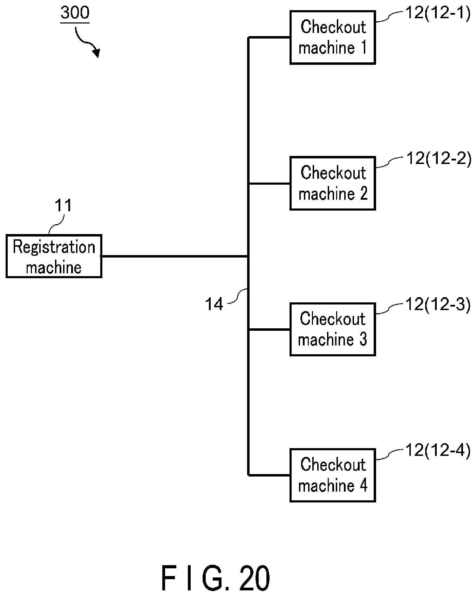

FIG. 20 is a conceptual diagram of a transaction processing system 300 according to the third embodiment. The transaction processing system 300 includes one registration machine 11 and four checkout machines 12-1, 12-2, 12-3, and 12-4. The registration machine 11 and the checkout machines 12-1, 12-2, 12-3 and 12-4 are connected to each other via the network 14. Although not illustrated, the server 13 is also connected to the network 14 as in the first embodiment.

In the transaction processing system 300, the registration machine 11 and four checkout machines 12-1, 12-2, 12-3 and 12-4 constitute one group. The number of checkout machines 12 may be any number equal to or greater than three. For example, a single transaction processing system may be constituted by mixing a group constituted by three checkout machines 12 and a group constituted by four checkout machines 12.

The registration machine 11 and the checkout machines 12-1, 12-2, 12-3, and 12-4 are the same as those in the first embodiment in terms of hardware configuration. Therefore, in the second embodiment, FIGS. 2 and 3 are adopted as they are and their description is omitted.

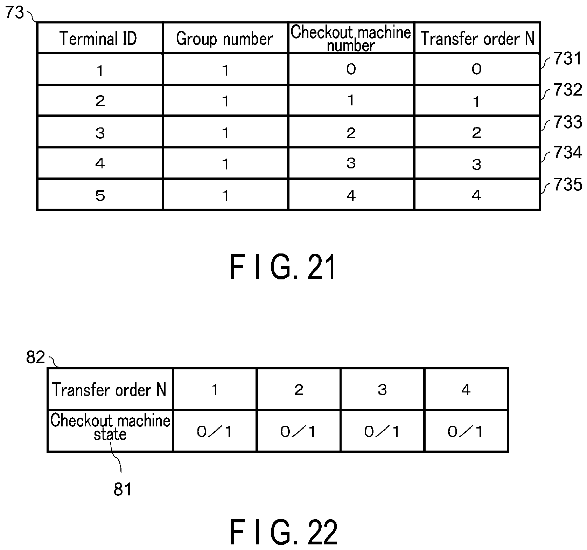

FIG. 21 is a schematic diagram showing a main data structure of the connection state table 73 included in each of the registration machine 11 and the checkout machines 12-1, 12-2, 12-3, and 12-4 which constitute one group. The connection state table 73 is stored in, for example, the auxiliary storage devices 33 and 53.

As shown in FIG. 21, the connection state table 73 describes data records 731, 732, 733, 734, and 735 constituted by elements including a terminal ID, a group number, a checkout machine number, and a transfer order N. The data record 731 is a data record related to the registration machine 11. The data record 732 is a data record related to the checkout machine 12-1. The data record 733 is a data record related to the checkout machine 12-2. The data record 734 is a data record related to the checkout machine 12-3. The data record 735 is a data record related to the checkout machine 12-4.

The terminal ID is unique identification information set for each of the terminals, the registration machine 11-1, and the checkout machines 12-1, 12-2, 12-3, and 12-4.

The group number is a number set for each group in order to identify a group including one registration machine 11 and four checkout machines 12-1, 12-2, 12-3, and 12-4. Therefore, the group numbers in the connection state table 73 for one group are the same. The group numbers may or may not be consecutive numbers. At minimum, it is sufficient that the group number does not overlap with the group number of another group.

The checkout machine numbers are consecutive numbers starting from "1", each set for each checkout machine in order to individually identify four checkout machines 12-1, 12-2, 12-3, and 12-4 constituting the same group. Meanwhile, "0" is set as the checkout machine number for the registration machine 11 constituting the same group.

The transfer numbers are consecutive numbers starting from "1", each indicating the transfer number N of the settlement information transmitted from the registration machine 11 to each of the four checkout machines 12-1, 12-2, 12-3, and 12-4 constituting the same group. The present embodiment assumes that the transfer order N of the checkout machine 12-1 whose checkout machine number is "1" is the first place, the transfer order N of the checkout machine 12-2 whose checkout machine number is "2" is the second place, and the transfer order N of the checkout machine 12-3 whose checkout machine number is "3" is the third place, and the transfer order N of the checkout machine 12-4 whose checkout machine number is "4" is the fourth place. For the registration machine 11, "0" is set as the transfer order N.

Hereinafter, for the convenience of description, the checkout machine 12-1 having the checkout machine number of "1" will referred to as a first checkout machine 12-1, the checkout machine 12-2 having the checkout machine number of "2" will be referred to as a second checkout machine 12-2, the checkout machine 12-3 having the checkout machine number of "3" will be referred to as a third checkout machine 12-3, and the checkout machine 12-4 having the checkout machine number "4" will be referred to as a fourth checkout machine 12-4. Since the first checkout machine 12-1 has the first transfer order, it can be considered as a parent machine, a master machine, etc. Since all of the second checkout machine 12-2, the third checkout machine 12-3, and the fourth checkout machine 12-4 have the second or lower transfer order, the second checkout machine 12-2, the third checkout machine 12-3, and the fourth checkout machine 12-4 may be referred to as a slave apparatus, a satellite apparatus, or the like.

FIG. 22 is a schematic diagram showing a data structure of a checkout machine state table 82 included in the register machine 11. The checkout machine state table 82 is stored in, for example, a volatile memory area of the main memory 32. The checkout machine state table 82 is a data table for specifying a checkout machine of which transfer order N is set to the transmission destination of the settlement information among the checkout machines 12-1, 12-2, 12-3, and 12-4 of the first to fourth transfer orders N.

The checkout machine state table 82 stores a checkout machine state flag for each transfer order N. The checkout state flag corresponds to 1-bit data of "0" or "1". The present embodiment assumes that the value of the checkout machine state flag 81 indicative of being set to the transmission destination is "1", and the value of the checkout machine state flag 81 indicative of being not set to the transmission destination is "0". The number of checkout machines set to the transmission destination is one. This means that, among the checkout machine state flags 81 stored in the checkout machine state table 82, the checkout machine state flag 81 corresponding to one transfer order N exhibits "1", and the checkout machine state flags 81 corresponding to the other transfer orders N exhibit "0". By default, the checkout machine state flag 81 having the first transfer order N exhibits "1", and the checkout machine state flags 81 having the second to fourth transfer orders N exhibit "0". Hereinafter, the checkout machine to which the transfer order N corresponding to the checkout machine state flag 81 of "1" is set will be referred to as a transmission destination checkout machine 12-X. Meanwhile, among the checkout machine state flags 81, the value of the checkout machine state flag 81 indicative of being set to the transmission destination may be "0", and the value of the checkout machine state flag 81 indicative of being not set to the transmission destination may be "1". The checkout machine state table 82 is an example of a storage unit.

### [Function of Transaction Processing System]

The first function of the transaction processing system 300 is the same as that of the transaction processing system 100 according to the first embodiment except for the processing from ACT 8 to ACT 11 executed by the processor 31 of the registration machine 11 in accordance with to the first information processing. Therefore, the flowcharts shown in FIG. 6, FIG. 8, and FIG. 9 described in the first embodiment are also employed in the third embodiment as they are, and the description thereof is omitted.

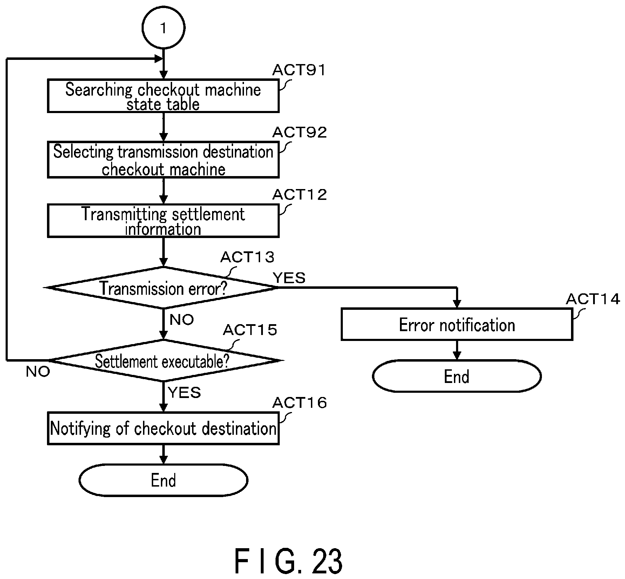

FIG. 23 is a flowchart showing a main procedure of processing after ACT 7 executed by the processor 31 of the registration machine 11 in accordance with the first information processing. Portions common to those in FIG. 7 described in the first embodiment are denoted by the same reference numerals.

That is, after creation of the settlement information in ACT 7 of FIG. 6, the processor 31 proceeds to ACT 91 of FIG. 23. As ACT 91, the processor 31 searches the checkout machine state table 82 to recognize the transfer order corresponding to the checkout machine state flag of "1". As ACT 92, the processor 31 then refers to the connection state table 73 to select the transmission destination checkout machine 12-X to which the recognized transfer order is set. As ACT 12, the processor 31 controls the communication unit 35 in such a manner as to transmit the settlement information to the transmission destination checkout machine 12-X. Thereafter, the processor 31 executes the same processing as the processing from ACT 13 to ACT 16 described in the first embodiment.

In this manner, upon creation of the settlement information, the registration machine 11 selects the transmission destination checkout machine 12-X based on the information in the connection state table 73 and the checkout machine state table 82, and transmits the settlement information to the transmission destination checkout machine 12-X.

Herein, the processor 31 realizes the function of the creation unit 311 by executing the processing of ACT 7 in FIG. 6. The processor 31 executes the processing of ACT 91, ACT 92, and ACT 12 in FIG. 23, thereby realizing the function of the transmission unit 312.

For example, in the case of the first checkout machine 12-1 being the transmission destination checkout machine, the settlement information is transmitted from the registration machine 11 to the first checkout machine 12-1. At this time, in the case of the first checkout machine 12-1 being settlement executable, the customer 22 can perform settlement of the transaction using the first checkout machine 12-1.

On the other hand, in the case of the first checkout machine 12-1 being in a busy state, for example, the settlement information is transmitted from the first checkout machine 12-1 to the second checkout machine 12-2. In addition, for example, in the case of the second checkout machine 12-2 being also in the busy state, the settlement information is transmitted from the second checkout machine 12-2 to the third checkout machine 12-3. Therefore, if any of the checkout machines belonging to the same group can execute checkout, the customer 22 can settle the transaction.

However, if the first checkout machine 12-1 which is the transmission destination checkout machine is shut down, the settlement information is not transmitted to all the checkout machines belonging to the same group, and thus the customer 22 can no longer settle the transaction. In order to solve such a problem, the transaction processing system 300 also has a second function. The second function is basically the same as that of the transaction processing system 100 according to the first embodiment. That is, in order to realize the second function, the processor 31 of the registration machine 11 has functions of the state confirmation unit 313, the change unit 314, and the restoration unit 315. The processors 51 of the first checkout machine 12-1, the second checkout machine 12-2, the third checkout machine 12-3, and the fourth checkout machine 12-4 each have the function of the confirmation notification unit 512 and the change notification unit 513. The function of the state confirmation unit 313 is based on the second information processing. The functions of the change unit 314 and the restoration unit 315 are based on the third information processing. The function of the confirmation notification unit 512 is based on the sixth information processing. The function of the change notification unit 513 is based on the seventh information processing.

The procedure of the sixth information processing executed by the processors 51 of the first checkout machine 12-1, the second checkout machine 12-2, the third checkout machine 12-3, and the fourth checkout machine 12-4 is the same as that of the first embodiment. Therefore, FIG. 10 is also adopted in the third embodiment. Hereinafter, the first checkout machine 12-1, the second checkout machine 12-2, the third checkout machine 12-3, and the fourth checkout machine 12-4 may be collectively referred to as a checkout machine 12-K.

Every time the notification timing of the checkout machine check notification comes as ACT 51, the processor 51 of the checkout machine 12-K controls the communication unit 55 in such a manner as to transmit the check start notification command to the registration machine 11 as ACT 52. By this control, the confirmation start notification command is periodically transmitted from the checkout machine 12-K to the registration machine 11.

Here, the processor 51 of the checkout machine 12-K realizes the function of the confirmation notification unit 512 through the processing of ACT 51 and ACT 52.

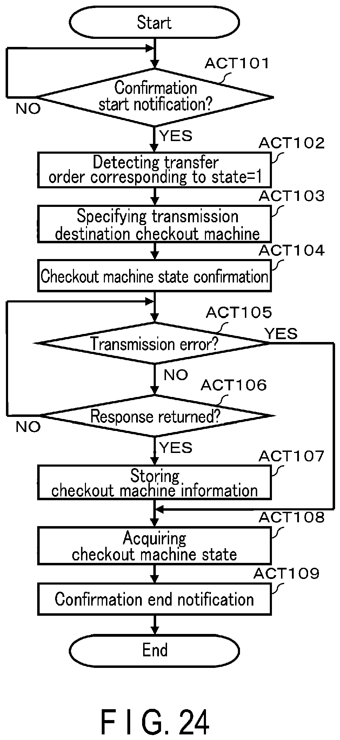

FIG. 24 is a flowchart illustrating a procedure of the second information processing executed by the processor 31 of the registration machine 11. As ACT 101, the processor 31 waits for the confirmation start notification command. Upon receipt of the confirmation start notification command via the communication unit 35, the processor 31 proceeds to YES in ACT 101. As ACT 102, the processor 31 refers to the checkout machine state table 82 to detect the transfer order N corresponding to the checkout machine state flag of "1". Next, the processor 31 refers to the connection state table 73 as ACT 103 and specifies the device ID of the checkout machine to which the transfer order N detected in the processing of ACT 102 is set, that is, the transmission destination checkout machine 12-X.

As ACT 104, the processor 31 controls the communication unit 35 in such a manner as to transmit the state confirmation command to the transmission destination checkout machine 12-X. By this control, the state confirmation command is transmitted to the transmission destination checkout machine 12-X.

As ACT 105, The processor 31 that has controlled the transmission of the state confirmation command confirms whether or not a transmission error has occurred. For example, in the case where the transmission destination checkout machine 12-X has been shut down, the transmission of the state confirmation command results in an error. In the case where the transmission of the state confirmation command results in an error, the processor 31 proceeds to "YES" in ACT 105, and proceeds to the processing of ACT 108. Processing after ACT 108 will be described later.

The processor 51 of the transmission destination checkout machine 12-X which receives the state confirmation command collects information necessary for confirmation of a state, i.e., so-called checkout machine information. The processor 51 then controls the communication unit 55 in such a manner as to transmit the confirmation response command including the checkout machine information to the registration machine 11. By this control, the confirmation response command is transmitted to the registration machine 11. The confirmation response command includes checkout machine information. The contents of the checkout machine information are the same as those in the first embodiment.

If the transmission of the state confirmation command does not result in an error, the processor 31 proceeds to YES in ACT 105. As ACT 106, the processor 31 waits for the confirmation response command from the transmission destination checkout machine 12-X. Upon receipt of an acknowledgment command via the communication unit 35, the processor 31 proceeds to YES in ACT 106. As ACT 107, the processor 31 stores checkout machine information included in the confirmation response command in a temporary memory of the main memory 32. Thereafter, the processor 31 proceeds to ACT 108.

In this way, in the case where the transmission of the state confirmation command results in an error or the checkout machine information of the response command with respect to the state confirmation command is stored in the temporary memory, the processor 31 proceeds to the processing in ACT 108.

As ACT 108, the processor 31 acquires data of the checkout machine state table 82. As ACT 109, the processor 31 then controls the communication unit 35 in such a manner as to transmit the confirmation end notification command to the checkout machine 12-K serving as the transmission source of the confirmation start notification command. By this control, in the case where the transmission source of the confirmation start notification command is the first checkout machine 12-1, the confirmation end notification command is transmitted to the first checkout machine 12-1. In the case where the transmission source of the confirmation start notification command is the second checkout machine 12-2, the confirmation end notification command is transmitted to the second checkout machine 12-2. In the case where the transmission source of the confirmation start notification command is the third checkout machine 12-3, the confirmation end notification command is transmitted to the third checkout machine 12-3. In the case where the transmission source of the confirmation start notification command is the fourth checkout machine 12-4, the confirmation end notification command is transmitted to the fourth checkout machine 12-4. The confirmation end notification command includes the date of the checkout machine state table 82 acquired in the processing of ACT 108. In addition, in the case where the checkout machine information is stored in the temporary memory in ACT 107, the checkout machine information is also included in the confirmation end notification command. The temporary memory is then cleared.

The processor 31 completes the second information processing in this manner.

As described above, the registration machine 11 acquires the checkout machine information of the transmission destination checkout machine 12-X every time the registration machine 11 receives the confirmation start notification command periodically transmitted from the checkout machine 12-K in the same group. The registration machine 11 transmits a confirmation end notification command including the acquired checkout machine information and the data of the checkout machine state table 82 at the current time point to the checkout machine 12-K which is the transmission source of the confirmation start notification command. In the case of being unable to acquire the checkout machine information from the checkout machine 12-X, the registration machine 11 transmits the confirmation end notification command including only the data of the checkout machine state table 82. The confirmation end notification command may include, in addition to the data of the checkout machine state table 82, information indicating that the checkout machine information was unable to be acquired.

Herein, the processor 31 of the registration machine 11 realizes the function of the state confirmation unit 313 by executing the processing from ACT 102 to ACT 109.

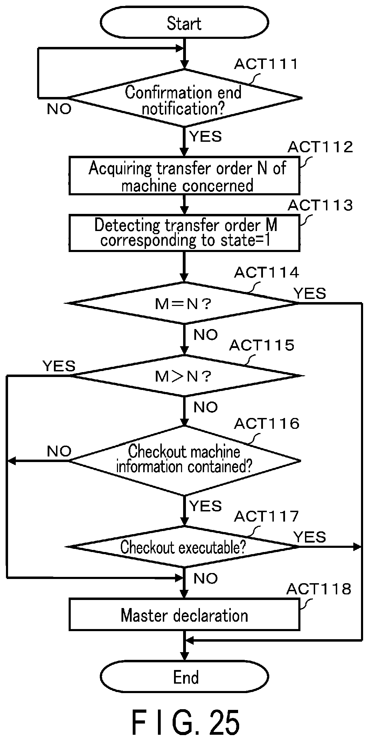

FIG. 25 is a flowchart showing a procedure of the seventh information processing executed by the processor 51 of the checkout machine 12-K in accordance with a settlement program. As ACT 111, the processor 51 waits for the confirmation end notification command. Upon receipt of the confirmation end notification command via the communication unit 55, the processor 51 proceeds to YES in ACT 111. As ACT 112, the processor 51 refers to the connection state table 71 and acquires a transfer order N associated with a device ID of the machine concerned. As ACT 113, the processor 51 searches the data of the checkout machine state table 82 included in the confirmation end notification command to detect the transfer order M corresponding to the checkout machine state flag of "1".

As ACT 114, the processor 51 confirms whether or not the transfer order M matches the transfer order N. In the case where the transfer order M matches the transfer order N, that is, in the case where the checkout machine concerned is the transmission destination checkout machine 12-X, the processor 51 proceeds to YES in ACT 114 and completes the seventh information processing.

In the case where the transfer order M does not match the transfer order N, the processor 51 proceeds to NO in ACT 114. As ACT 115, the processor 51 confirms whether or not the transfer order M is greater than the transfer order N. In the case where the transfer order M is greater than the transfer order N, that is, in the case where a checkout machine having a lower transfer order than that of the checkout machine concerned is the transmission destination checkout machine 12-X, the processor 51 proceeds to YES in ACT 115 and shifts to the processing in ACT 118. Processing after ACT 118 will be described later.

In the case where the transfer order M is smaller than the transfer order N, that is, in the case where a checkout machine having a higher transfer order than that of the checkout machine concerned is the transmission destination checkout machine 12-X, the processor 51 proceeds to NO in ACT 115. As ACT 116, the processor 51 confirms whether or not the confirmation end notification command includes the checkout machine information of the checkout machine 12-X serving as the transmission destination. In the case of the confirmation end notification command not including the checkout machine information, the processor 51 proceeds to NO in ACT 116 and shifts to the processing of ACT 118.

In the case of the confirmation end notification command including the checkout machine information, the processor 51 proceeds to YES in ACT 116. As ACT 117, the processor 51 analyzes the checkout machine information. As in the description of the processing of ACT 78 in the first embodiment, the processor 51 determines whether or not the transmission destination checkout machine 12-X is in the checkout executable state. In the case where the transmission destination checkout machine 12-X is in the checkout executable state, the processor 51 proceeds to YES in ACT 117 and completes the seventh information processing. In the case where the transmission destination checkout machine 12-X is in the checkout inexecutable state, the processor 51 proceeds to NO in ACT 117 and shifts to ACT 118.

As described above, in the case where the transfer order M is smaller than the transfer order N, in the case where the confirmation end notification command does not include the checkout machine information of the transmission destination checkout machine 12-X, or in the case where the transmission destination checkout machine 12-X is in the checkout inexecutable state, the processor 51 shifts to ACT 118. As ACT 118, the processor 51 controls the communication unit 55 in such a manner as to transmit a master declaration command to the registration machine 11. By this control, the master declaration command is transmitted to the registration machine 11. The master declaration command includes the terminal ID of the checkout machine 12-K serving as the transmission source. The processor 51 that has controlled the transmission of the master declaration command completes the seventh information processing.

That is, the second checkout machine 12-2, the third checkout machine 12-3, or the fourth checkout machine 12-4 confirms whether or not the confirmation end notification command includes the checkout machine information of the transmission destination checkout machine 12-X in the case where the transfer order M of the transmission destination checkout machine 12-X is higher than the transfer order N of the checkout machine concerned. In the case where the confirmation end notification command does not include the checkout machine information, the second checkout machine 12-2, the third checkout machine 12-3, or the fourth checkout machine 12-4 transmits the master declaration command to the registration machine 11. Furthermore, also in the case where the confirmation end notification command includes the checkout machine information but the checkout machine information concerned satisfies the transmission destination change condition, the second checkout machine 12-2, the third checkout machine 12-3, or the fourth checkout machine 12-4 transmits the master declaration command to the registration machine 11.

Herein, the processor 51 of the second checkout machine 12-2, the third checkout machine 12-3, or the fourth checkout machine 12-4 realizes the function of the change notification unit 513 through the processing from ACT 116 to ACT 118.

On the other hand, the first checkout machine 12-1, the second checkout machine 12-2, or the third checkout machine 12-3 transmits the master declaration command to the registration machine 11 in the case where the transfer order M of the transmission destination checkout machine 12-X is lower than the transfer order N of the checkout machine concerned.

Herein, the processor 51 of the first checkout machine 12-1, the second checkout machine 12-2, or the third checkout machine 12-3 realizes the function of the change notification unit 513 by executing the processing of ACT 115 and ACT 118. The former change notification unit 513 may be referred to as the first change notification unit 513, and the latter change notification unit 513 may be referred to as the second change notification unit 513.

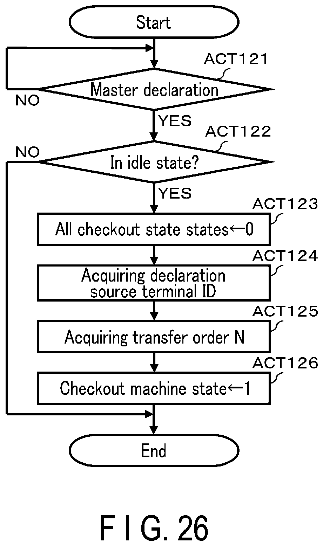

FIG. 26 is a flowchart showing a procedure of the third information processing executed by the processor 31 of the registration machine 11 in accordance with the registration program. As ACT 121, the processor 31 waits for a master declaration command. Upon receipt of the master declaration command via the communication unit 35, the processor 31 proceeds to YES in ACT 121. As ACT 122, the processor 31 confirms whether or not the registration machine 11 is in the idle state. The idle state is a state in which the processor 31 is not executing the first information processing or the second information processing. In the case where the registration machine 11 is not in the idle state, the processor 31 proceeds to NO in ACT 122 and completes the third information processing.

In the case where the master declaration command is received while the registration machine 11 is in the idle state, the processor 31 proceeds to YES in ACT 122. As ACT 123, the processor 31 sets all the checkout machine state flags of the checkout machine state table 82 to "0".

As ACT 124, the processor 31 acquires the device ID of the checkout machine 12-K which has transmitted the master declaration command. Next, as ACT 125, the processor 31 refers to the connection state table 73 and acquires the transfer order N of the checkout machine 12-K to which the aforementioned device ID is set. As ACT 126, the processor 31 sets the checkout machine state flag corresponding to the transfer order N to "1". The processor 31 completes the third information processing in this manner.

As described above, in the case of receiving the master declaration command from the second checkout machine 12-2 having the second transfer order while the transmission destination checkout machine 12-X is the first checkout machine 12-1, that is, while the checkout machine state flag corresponding to the first transfer order is "1", the registration machine 11 changes the checkout machine state flag corresponding to the first transfer order of the checkout machine state table 82 to "0" and changes the checkout machine state flag corresponding to the second transfer order to "1". As a result, in the registration machine 11, the second checkout machine 12-2 is selected as the transmission destination checkout machine 12-X through the processing of ACT 91 and ACT 92 in FIG. 23, and the settlement information is transmitted to the second checkout machine 12-2. In the case of the second checkout machine 12-2 being settlement executable, the customer 22 can perform settlement of the transaction using the second checkout machine 12-2.

In the case of receiving the master declaration command from the third checkout machine 12-3 having the third transfer order while the transmission destination checkout machine 12-X is the second checkout machine 12-1, that is, while the checkout machine state flag corresponding to the second transfer order is "1", the registration machine 11 changes the checkout machine state flag corresponding to the second transfer order of the checkout machine state table 82 to "0" and changes the checkout machine state flag corresponding to the third transfer order to "1". As a result, in the registration machine 11, the third checkout machine 12-3 is selected as the transmission destination checkout machine 12-X through the processing of ACT 91 and ACT 92 in FIG. 23, and the settlement information is transmitted to the third checkout machine 12-3. In the case of the third checkout machine 12-3 being settlement executable, the customer 22 can perform settlement of the transaction using the third checkout machine 12-3.

On the other hand, in the case of receiving the master declaration command from the first checkout machine 12-1 having the first transfer order while the transmission destination checkout machine 12-X is the second checkout machine 12-2, that is, while the checkout machine state flag corresponding to the second transfer order is "1", the registration machine 11 changes the checkout machine state flag corresponding to the second transfer order of the checkout machine state table 82 to "0" and changes the checkout machine state flag corresponding to the first transfer order to "1". As a result, in the registration machine 11, the first checkout machine 12-1 is selected as the transmission destination checkout machine 12-X through the processing of ACT 91 and ACT 92 in FIG. 23, and the settlement information is transmitted to the first checkout machine 12-1. In the case of the first checkout machine 12-1 being settlement executable, the customer 22 can perform settlement of the transaction using the first checkout machine 12-1.

Herein, the processor 31 of the registration machine 11 realizes the function of the change unit 314 and the restoration unit 315 by executing the processing from ACT 123 to ACT 126.

Next, a sequence of commands exchanged between the registration machine 11 and the first checkout machine 12-1, the second checkout machine 12-2, the third checkout machine 12-3, and the fourth checkout machine 12-4 in the second function described above will be described.

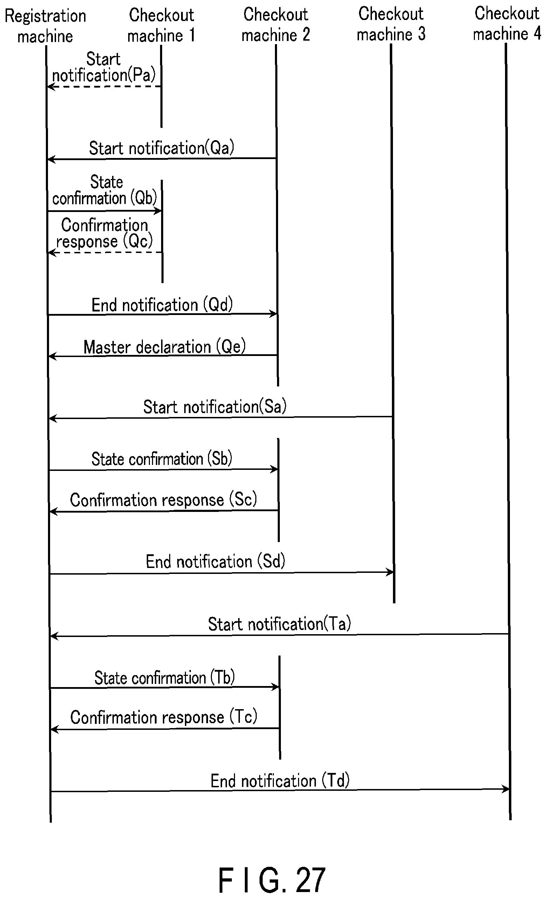

FIG. 27 is a sequence diagram showing a case in which the first checkout machine 12-1 which is the transmission destination checkout machine is shut down. Since the first checkout machine 12-1 is shut down, the confirmation start notification command (Pa) is not transmitted. For this reason, the exchange of the state confirmation command (Pb), the confirmation response command (Pc), and the confirmation end notification command (Pd) which are performed between the registration machine 11 and the first checkout machine 12-1 in response to the confirmation start notification command (Pa) are not performed.

On the other hand, the confirmation start notification command (Qa) is transmitted from the second checkout machine 12-2. Upon receipt of the confirmation start notification command (Qa), the registration machine 11 transmits a state confirmation command (Qb) to the first checkout machine 12-1. However, the transmission of the state confirmation command (Qb) results in an error, so that the registration machine 11 is unable to receive the confirmation response command (Qc). Therefore, the confirmation end notification command (Qdz) transmitted from the registration machine 11 to the second checkout machine 12-2 does not include the checkout machine information. The transfer order M (=1) of the first checkout machine 12-1 which is the transmission destination checkout machine is smaller than the transfer order N (=2) of the second checkout machine 12-2. Therefore, the transmission destination change condition is satisfied, so that the second checkout machine 12-2 transmits the master declaration command (Qe) to the registration machine 11. As a result, the second checkout machine 12-2 becomes the transmission destination checkout machine 12-X.

Thereafter, in response to the confirmation start notification command (Sa) being transmitted from the third checkout machine 12-3, the registration machine 11 transmits the state confirmation command (Sb) to the second checkout machine 12-2. Upon receipt of the confirmation response command (Sc) from the second checkout machine 12-2, the registration machine 11 transmits the confirmation end notification command (Sd) including the checkout machine information and the data of the checkout machine state table 82 to the third checkout machine 12-3. At this time, the transfer order M (=2) of the second checkout machine 12-2 which is the transmission destination checkout machine is smaller than the transfer order N (=3) of the third checkout machine 12-3. In the case where the checkout machine information does not satisfy the transmission destination change condition, the third checkout machine 12-3 does not transmit the master declaration command to the registration machine 11. The same applies to a case in which the confirmation start notification command (Ta) is transmitted from the fourth checkout machine 12-4.

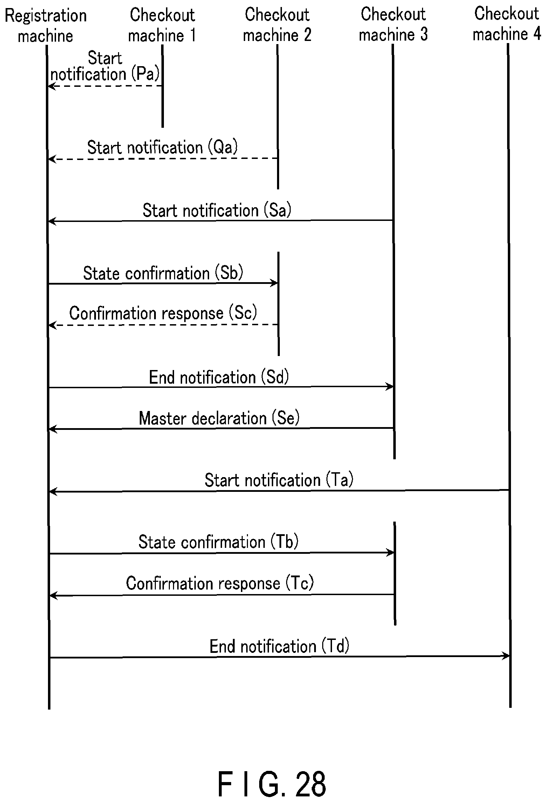

FIG. 28 is a sequence diagram showing a case in which the second checkout machine 12-2 is also shut down. Since the first checkout machine 12-1 and the second checkout machine 12-2 are shut down, the check start notification command (Pa, Qa) is not transmitted. Therefore, the exchange of the state confirmation command (Pb), the confirmation response command (Pc), and the confirmation end notification command (Pd) performed between the registration machine 11 and the first checkout machine 12-1, and the exchange of the state confirmation command (Qb), the confirmation response command (Qc), and the confirmation end notification command (Qd) performed between the registration machine 11 and the second checkout machine 12-2, are not performed.

On the other hand, the confirmation start notification command (Sa) is transmitted from the third checkout machine 12-3. Upon receipt of the confirmation start notification command (Sa), the registration machine 11 transmits a state confirmation command (Sb) to the second checkout machine 12-2 which is the transmission destination checkout machine. However, the transmission of the state confirmation command (Sb) results in an error, so that the registration machine 11 is unable to receive the confirmation response command (Sc). Therefore, the confirmation end notification command (Sd) transmitted from the registration machine 11 to the third checkout machine 12-3 does not include the checkout machine information. Furthermore, the transfer order M (=2) of the second checkout machine 12-2 which is the transmission destination checkout machine is smaller than the transfer order N (=3) of the third checkout machine 12-3. Therefore, the transmission destination change condition is satisfied, so that the third checkout machine 12-3 transmits the master declaration command (Se) to the registration machine 11. As a result, the third checkout machine 12-3 becomes the transmission destination checkout machine 12-X.

Thereafter, in response to the confirmation start notification command (Ta) being transmitted from the fourth checkout machine 12-4, the registration machine 11 transmits the state confirmation command (Tb) to the third checkout machine 12-3. Upon receipt of the confirmation response command (Tc) from the third checkout machine 12-3, the registration machine 11 transmits the confirmation end notification command (Td) including the checkout machine information and the data of the checkout machine state table 82 to the fourth checkout machine 12-4. At this time, the transfer order M (=3) of the third checkout machine 12-3 which is the transmission destination checkout machine is smaller than the transfer order N (=4) of the fourth checkout machine 12-4. In the case where the checkout machine information does not satisfy the transmission destination change condition, the fourth checkout machine 12-4 does not transmit the master declaration command to the registration machine 11.

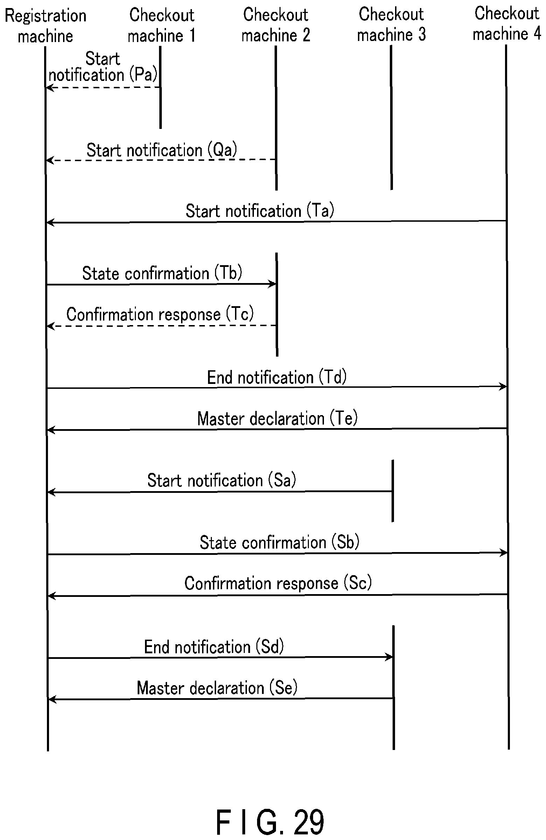

Like FIG. 28, FIG. 29 is a sequence diagram showing a case in which the confirmation start notification command (Ta) is first transmitted from the fourth checkout machine 12-4 to the registration machine 11 in the case where not only the first checkout machine 12-1 but also the second checkout machine 12-2 which is the transmission destination checkout machine is shut down.

As illustrated in the drawing, upon receipt of the confirmation start notification command (Ta) from the fourth checkout machine 12-4, the registration machine 11 transmits the state confirmation command (Tb) to the second checkout machine 12-2. However, the transmission of the state confirmation command (Tb) results in an error, so that the registration machine 11 is unable to receive the confirmation response command (Tc). Therefore, the confirmation end notification command (Td) transmitted from the registration machine 11 to the fourth checkout machine 12-4 does not include the checkout machine information. Furthermore, the transfer order M (=2) of the second checkout machine 12-2 which is the transmission destination checkout machine is smaller than the transfer order N (=4) of the fourth checkout machine 12-4. Therefore, the transmission destination change condition is satisfied, so that the fourth checkout machine 12-4 transmits the master declaration command (Te) to the registration machine 11. As a result, the fourth checkout machine 12-4 becomes the transmission destination checkout machine 12-X.

Thereafter, in response to the confirmation start notification command (Sa) being transmitted from the third checkout machine 12-3, the registration machine 11 transmits the state confirmation command (Sb) to the fourth checkout machine 12-4. Upon receipt of the confirmation response command (Sc) from the fourth checkout machine 12-4, the registration machine 11 transmits the confirmation end notification command (Sd) including the checkout machine information and the data of the checkout machine state table 82 to the third checkout machine 12-3. At this time, the transfer order M (=4) of the fourth checkout machine 12-4 which is the transmission destination checkout machine is higher than the transfer order N (=3) of the third checkout machine 12-3. Therefore, the transmission destination change condition is satisfied, so that the third checkout machine 12-3 transmits the master declaration command (Se) to the registration machine 11. As a result, the third checkout machine 12-3 becomes the transmission destination checkout machine 12-X.

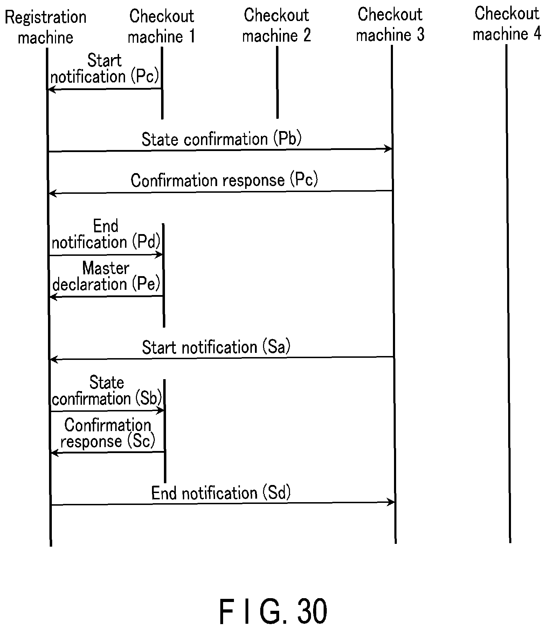

FIG. 30 is a sequence diagram showing a case in which the first checkout machine 12-1 which has been shut down is restored in the case where the third checkout machine 12-3 is the transmission destination checkout machine 12-X. The recovered first checkout machine 12-1 transmits a confirmation start notification command (Pa) to the registration machine 11. Upon receipt of the confirmation start notification command (Pa), the registration machine 11 transmits a state confirmation command (Pb) to the third checkout machine 12-3. Upon receipt of the confirmation response command (Pc) from the third checkout machine 12-3, the registration machine 11 transmits the confirmation end notification command (Pd) including the checkout machine information and the data of the checkout machine state table 82 to the first checkout machine 12-1. At this time, the transfer order M (=3) of the third checkout machine 12-3 which is the transmission destination checkout machine is higher than the transfer order N (=1) of the first checkout machine 12-1. Therefore, the transmission destination change condition is satisfied, so that the first checkout machine 12-1 transmits the master declaration command (Pe) to the registration machine 11. As a result, the first checkout machine 12-1 becomes the transmission destination checkout machine 12-X.

Thereafter, in response to the confirmation start notification command (Sa) being transmitted from the third checkout machine 12-3, the registration machine 11 transmits the state confirmation command (Sb) to the first checkout machine 12-1. Upon receipt of the confirmation response command (Sc) from the first checkout machine 12-1, the registration machine 11 transmits the confirmation end notification command (Sd) including the checkout machine information and the data of the checkout machine state table 82 to the third checkout machine 12-3. At this time, the transfer order M (=1) of the first checkout machine 12-1 which is the transmission destination checkout machine is smaller than the transfer order N (=3) of the third checkout machine 12-3. In the case where the checkout machine information does not satisfy the transmission destination change condition, the third checkout machine 12-3 does not transmit the master declaration command to the registration machine 11.

In the examples of the sequence shown in FIG. 27 to FIG. 30, the checkout machine 12-K transmits the confirmation start notification command (Pa, Qa, Sa, Ta) after the confirmation end notification command (Pd, Qd, Sd, Td) is transmitted from the registration machine 11. However, in practice, there may be a case in which the registration machine 11 receives the confirmation start notification command from one checkout machine 12-K before transmission of the confirmation end notification command to another checkout machine 12-K. In such a case, after transmission of the confirmation end notification command to one checkout machine 12-K, the registration machine 11 executes processing according to the confirmation start notification command from another checkout machine 12-K, that is, transmission of the state confirmation command, reception of the confirmation response command, and transmission of the confirmation end notification command.

As described above in detail, according to the transaction processing system 300, even in the case in which the transmission destination checkout machine 12-X is shut down and the registration machine 11 is no longer able to transmit the settlement information to the transmission destination checkout machine 12-X, another checkout machine 12-K can be immediately set as the transmission destination checkout machine 12-X. The same applies to a case in which settlement becomes inexecutable due to occurrence of a failure such as a printer error or a change machine error in the transmission destination checkout machine 12-X. Therefore, even in a case in which an abnormality occurs in the transmission destination checkout machine 12-X, delay in settlement of a transaction can be prevented. As a result, a transaction processing system with high processing efficiency can be provided.

Furthermore, in the case where the checkout machine 12-K having a higher transfer order than the checkout machine currently serving as the current transmission checkout machine is restored, the transmission destination checkout machine 12-X can be immediately returned to this restored checkout machine 12-K. Generally, in a semi self-checkout transaction processing system, there is a tendency for the transfer order of a checkout machine with a good customer movement efficiency to be set high. This can minimize the influence accompanying the abnormality in the checkout machine 12-1 having a high transfer order.

In the third embodiment as well, one or more checkout machines may be shared by different groups as in the second embodiment. In such a case also, the shared checkout machine transmits the confirmation start notification command (Qa, Ra) to the registration machines 11 of the respective groups.

The program according to the present embodiment may be transferred in a state of being stored in the electronic device or may be transferred in a state of not being stored in the electronic device. In the latter case, the program may be transferred via a network or may be transferred in a state of being recorded in a recording medium. The recording medium is a non-transitory tangible medium. The storage medium is a computer-readable medium. The recording medium may be any medium such as a CD-ROM or a memory card which is capable of storing a program and is readable by a computer, and the recording medium may be in any form.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit. The accompanying claims and their equivalents are intended to cover such forms or modifications as would fall within the scope and spirit.

## Claims

1. A transaction processing system comprising:
an input processing apparatus configured to create settlement information necessary for settlement of a transaction with a customer based on input data; and
three or more settlement apparatuses configured to execute settlement processing of the transaction based on the settlement information, wherein
a transfer order of the settlement information is set for each of the three or more settlement apparatuses,
the input processing apparatus includes:
a transmission unit configured to transmit the settlement information to a transmission destination settlement apparatus set as a transmission destination among the three or more settlement apparatuses;
a state confirmation unit configured to perform a state confirmation of the transmission destination settlement apparatus; and
a change unit configured to change a transmission destination of the settlement information to another settlement apparatus other than the transmission destination settlement apparatus upon receipt of a notification of transmission destination change from the another settlement apparatus, and
the three or more settlement apparatuses include:
a confirmation notification unit configured to notify the input processing apparatus of a state confirmation of the transmission destination settlement apparatus; and
a change notification unit configured to notify the input processing apparatus of a transmission destination change in a case where a state confirmation result of the transmission destination settlement apparatus responded to by the input processing apparatus in response to notification of the state confirmation satisfies a transmission destination change condition of the settlement information.

2. The transaction processing system according to claim 1, wherein
the state confirmation unit acquires information related to a state of the transmission destination settlement apparatus from the transmission destination settlement apparatus, and
the change notification unit notifies the input processing apparatus of a transmission destination change in a case where a transfer order of the transmission destination settlement apparatus included in the state confirmation result is higher than a transfer order of an apparatus concerned, and a case where the input processing apparatus responds that the information related to the state was unable to be received from the transmission destination settlement apparatus as a state confirmation result of the transmission destination settlement apparatus.

3. The transaction processing system according to claim 2, wherein the change notification unit notifies the input processing apparatus of a transmission destination change in a case where a transfer order of the transmission destination settlement apparatus included in the state confirmation result is higher than a transfer order of an apparatus concerned, a case where the information related to the state acquired from the transmission destination settlement apparatus as a state confirmation result of the transmission destination settlement apparatus is responded to by the transmission destination settlement apparatus, and a case where the information related to the state satisfies a transmission destination change condition.

4. The transaction processing system according to any one of claims 1 to 3, wherein the change notification unit notifies the input processing apparatus of a transmission destination change in a case where a transfer order of the transmission destination settlement apparatus included in the state confirmation result is lower than a transfer order of an apparatus concerned.

5. The transaction processing system according to any one of claims 2 to 4, wherein
the input processing apparatus further comprises a storage unit configured to store a transfer order of a settlement apparatus set as a transmission destination settlement apparatus among the three or more settlement apparatuses, and
information stored in the storage unit is reported along with a state confirmation result of the transmission destination settlement apparatus.

6. The transaction processing system according to any one of claims 1 to 5, wherein
the three or more settlement apparatuses periodically perform notification of a state confirmation using the confirmation notification unit, and
the input processing apparatus performs a state confirmation using the state confirmation unit in response to the notification of the state confirmation, and responds a state confirmation result to the settlement apparatus that has made the notification.

7. A settlement apparatus in a transaction processing system comprising an input processing apparatus configured to create settlement information necessary for settlement of a transaction with a customer based on input data, and three or more settlement apparatuses configured to execute settlement processing of the transaction based on the settlement information, wherein a transfer order of the settlement information is set for each of the three or more settlement apparatuses, wherein
the settlement apparatus comprises:
a confirmation notification unit configured to notify the input processing apparatus of a state confirmation of a transmission destination settlement apparatus set as a transmission destination; and
a change notification unit configured to notify the input processing apparatus of a transmission destination change in a case where a state confirmation result of the transmission destination settlement apparatus responded to by the input processing apparatus in response to notification of the state confirmation satisfies a transmission destination change condition of the settlement information.

8. An input processing apparatus constituting a transaction processing system, in combination with three or more settlement apparatuses configured to execute settlement processing of a transaction based on settlement information necessary for settlement of a transaction with a customer, wherein
the input processing apparatus comprises:
a creation unit configured to create the settlement information based on input data;
a transmission unit configured to transmit the settlement information to a transmission destination settlement apparatus set as a transmission destination among the three or more settlement apparatuses;
a state confirmation unit configured to perform a state confirmation of the transmission destination settlement apparatus; and
a change unit configured to change a transmission destination of the settlement information to another settlement apparatus other than the transmission destination settlement apparatus upon receipt of a notification of transmission destination change from the another settlement apparatus.

9. A program recording medium recording a program for causing a computer of a settlement apparatus in a transaction processing system comprising an input processing apparatus configured to create settlement information necessary for settlement of a transaction with a customer based on input data, and three or more settlement apparatuses configured to execute settlement processing of the transaction based on the settlement information, wherein a transfer order of the settlement information is set for each of the three or more settlement apparatuses, to function as:
a confirmation notification unit configured to notify the input processing apparatus of a state confirmation of a transmission destination settlement apparatus set as a transmission destination; and
a change notification unit configured to notify the input processing apparatus of a transmission destination change in a case where a state confirmation result of the transmission destination settlement apparatus responded to by the input processing apparatus in response to notification of the state confirmation satisfies a transmission destination change condition of the settlement information.

10. A program recording medium recording a program for causing a computer of an input processing apparatus constituting a transaction processing system, in combination with three or more settlement apparatuses configured to execute settlement processing of a transaction based on settlement information necessary for settlement of a transaction with a customer, to function as :
a creation unit that creates the settlement information based on input data;
a transmission unit configured to transmit the settlement information to a transmission destination settlement apparatus set as a transmission destination among the three or more settlement apparatuses;
a state confirmation unit configured to perform a state confirmation of the transmission destination settlement apparatus; and
a change unit configured to change a transmission destination of the settlement information to another settlement apparatus other than the transmission destination settlement apparatus upon receipt of a notification of transmission destination change from the another settlement apparatus.
